(19) Europäisches Patentamt
European Patent Office
Office européen des brevets

(11) Veröffentlichungsnummer: **0 090 992**
**B1**

# (12) EUROPÄISCHE PATENTSCHRIFT

(45) Veröffentlichungstag der Patentschrift: **24.07.85**

(51) Int. Cl.⁴: **C 05 D 9/02**

(21) Anmeldenummer: **83102752.9**

(22) Anmeldetag: **21.03.83**

(54) **Depotdüngemittel, Verfahren zu ihrer Herstellung und deren Verwendung.**

(30) Priorität: **03.04.82 DE 3212537**

(43) Veröffentlichungstag der Anmeldung: **12.10.83 Patentblatt 83/41**

(45) Bekanntmachung des Hinweises auf die Patenterteilung: **24.07.85 Patentblatt 85/30**

(84) Benannte Vertragsstaaten: **AT BE CH DE FR GB IT LI NL**

(56) Entgegenhaltungen:
**EP - A - 0 041 169**
**WO - A - 81/00010**
**BE - A - 786 874**
**CH - A - 329 054**
**DE - A - 2 353 125**
**DE - A - 2 648 119**
**DE - A - 2 903 263**
**DE - C - 901 058**
**FR - A - 2 222 331**
**FR - A - 2 273 471**
**FR - A - 2 506 296**
**GB - A - 1 184 332**
**US - A - 4 249 930**

(73) Patentinhaber: **BAYER AG, Konzernverwaltung RP Patentabteilung, D-5090 Leverkusen 1 Bayerwerk (DE)**

(72) Erfinder: **Brunn, Horst, Dr., Oderstrasse 55, D-4150 Krefeld (DE)**
Erfinder: **Niggemann, Johannes, Dr., Christian-Hess-Strasse 73, D-5090 Leverkusen 1 (DE)**
Erfinder: **Köhler, Peter, Dr., Bethelstrasse 10, D-4150 Krefeld (DE)**
Erfinder: **Hund, Franz, Dr., Friedrich-Ebert-Strasse 3-5, D-4150 Krefeld (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 090 992 B1

## Beschreibung

Die vorliegende Erfindung betrifft neue Depotdüngemittel, die aus anorganischen ad- und desorptionsfähigen Mehrstoffsystemen, im folgenden Kompositionsverbindungen genannt, bestehen.

Es ist bekannt, dass silicatische Tonminerale in natürlichen Böden sowohl in der Matrix als auch sorbiert Pflanzennährstoffionen, vornehmlich Kationen, enthalten. Synthetisch hergestellte und natürliche Tonmineralien können als Düngemittel verwendet werden, wenn sie Pflanzennährstoffe in einer genügend für Pflanzen aufnehmbaren Form enthalten bzw. nach Einmischung die Eigenschaften eines Kulturmediums (z. B. Boden, gärtnerische Erden und Kultursubstrate) günstiger für das Pflanzenwachstum gestalten. Solche unmittelbar bzw. mittelbar Nutzpflanzen zugeführten Stoffe vermögen das Wachstum zu fördern, den Ertrag zu erhöhen und die Qualität der Pflanzenprodukte zu verbessern. Zur Melioration von leichten Sandböden (J. Lhotsky, Intern. Zeitschr. Landwirtsch. Moskau/Berlin H. 2, S. 180-183, 1976) bzw. zur Verbesserung von Kulturmedien (E. Schwemmer: Gartenwelt 76, 426-428, 1976) wird vielfach Bentonit verwendet (s. a. F. Köhlein: Gartenpraxis 10/1978, S. 515-516; R. Fahn: Was ist Bentonit? Sonderdruck Süd-Chemie AG 1968). Als Trägerstoff für Makro- und besonders für Mikronährstoffe der Pflanze scheinen vor allem in Israel modifizierte Montmorillonite an Bedeutung zu gewinnen (A. Banin und J. Navrot, Agron. J. 68, 353-358, 1976; J. Navrot; A. Banin, Agron. J. 68, 358-361, 1976; Plant and Soil 42; 309-312, 1975).

Bedeutungsvoll als Boden und Substratverbesserungsmittel sind auch in Hitze expandierte natürliche vorkommende Tone, wie z. B. Vermiculit. Diese aufgeblähten Materialien können oft auch als Inertsubstrate im Pflanzenbau Verwendung finden.

Mit Ammoniak behandelt, lässt sich aus Vermiculit ein Stickstoffdepotdünger herstellen (J. Russel, A. Fraser, J. Sci. Fd. Agric. 28, 852-854, 1977).

Auch synthetisch produzierten Zeolithen (Natriumaluminiumsilikaten) wird zukünftig als Dünge- und Bodenverbesserungsmittel eine gewisse Bedeutung eingeräumt (A. Dyer, Ann. Meeting Sect. B., Nr. 41, Brit. Assoc. Adv. Sci. BA AT Salford 1980). Solche synthetisch hergestellten Zeolithe, aber auch natürlich vorkommende Zeolithe, wie Clinoptilolit, sind nach Anreicherung mit Pflanzennährstoffen auch als Düngemittel verwendbar (D. Hershey, J. Paul, R. Carlson, Hort. Sci, 15, 87-89, 1980).

Die vorgenannten Depotdüngemittel besitzen alle vornehmlich die Eigenschaften von Kationenaustauschern. Insbesondere bei Böden und Kultursubstraten, die nur ein geringes Festhaltevermögen für Nährstoff-Anionen aufweisen, wäre der Einsatz von Depot-Düngemitteln wünschenswert, die auch zur Anionenbindung befähigt sind.

Es sind zwar schon Kompositionssysteme beschrieben, in denen Sorptionskomplexe Ionen und organische Verbindungen aufnehmen und abgeben können (GB-PS Nr. 1184332).

Auch wird der Einsatz von citratstabilisierten Eisen(III)oxidhydroxidhydratsolen bzw. -gelen in der Human- und Veterinärmedizin beschrieben (DE-OS Nr. 2903263).

In dem US-P Nr. 4249930 wird über eine neue ionische Verbindung berichtet, die durch gemeinsames Mahlen von Einsensulfat und Harnstoff in einer Kugelmühle hergestellt wurde. Die entstandene Aquocarbamid-Eisen(II)sulfatverbindung war als Mittel zur Bekämpfung von Eisenmangelchlorosen an Pflanzen verwendbar.

Ziel der vorliegenden Anmeldung ist die Entwicklung neuer Depotdüngemittel, die besonders gute Eigenschaften sowohl als Anionen- wie auch als Kationenaustauscher aufweisen.

Materialien, die diese Forderungen in hervorragender Weise erfüllen, sind Depotdüngemittel der allgemeinen Formel

$$x\,Me(II)O \cdot \frac{1-x}{2}\,Me(III)_2O_3 \cdot y\,A \cdot z\,I \cdot aq$$

in der:

Me(II) ein oder mehrere zweiwertige Metalle,

Me(III) ein oder mehrere dreiwertige Metalle,

A eine oder mehrere anorganische Säuren bzw. Anhydride anorganischer Säuren,

I eine oder mehrere organische Verbindungen, und

aq 0-9 $H_2O$, vorzugsweise 0,5-6 bedeuten,

x, y und z ganze oder gebrochene Zahlen sind, mit x-Werten von 0-1, vorzugsweise 0,2-0,9, y-Werten von 0,05-0,7, z-Werten von 0-20, mit der weiteren Massgabe, dass zumindest eine der Komponenten ein Pflanzennährelement enthält.

Sie weisen hervorragende Düngemitteleigenschaften, vor allem mit langsamanhaltendem Nährstofffluss auf.

In der Formel

$$x\,Me(II)O \cdot \frac{1-x}{2}\,Me(III)_2O_3 \cdot y\,A \cdot z\,I \cdot aq$$

können die zweiwertigen Metalle eines oder mehrere der Gruppe Calcium, Magnesium, Eisen, Mangan, Kupfer, Nickel, Cobalt und Zink, die dreiwertigen eines oder mehrere der Gruppe Aluminium, Eisen und Mangan sein.

Die weiteren anorganischen Bestandteile (A) bestehen aus anorganischen Säuren und/oder Anhydriden anorganischer Säuren der Elemente Stickstoff, Phosphor, Schwefel, Chlor, Bor, Kohlenstoff, Silicium, Molybdän, Titan und/oder Vanadin.

Dabei haben die Elemente Stickstoff, Phosphor, Schwefel, Kalium, Calcium und Magnesium die Funktion von Hauptnährelementen, Eisen, Mangan, Zink, Kupfer, Chlor, Bor und Molybdän fungieren als Spurennährelemente, potentielle Nährelemente sind Natrium, Kobalt, Silizium, Aluminium, Vanadin, Nickel und Titan (s. a. Finck, Pflanzenernährung in Stichworten, Verlag F. Hirt, 1969; Finck, Dünger und Düngung, Verlag Chemie 1979).

Als organische Verbindungen (I) können enthalten sein: Komplexbildner, wie beispielsweise Zitronensäure, Ethylendiamintetraessigsäure und andere Aminopolycarbonsäure darunter auch Diethylenetriaminpentaessigsäure, Ligninsulfonate und ihre Salze, Alginate und ihre Salze sowie auch andere Meerespflanzenpräparate, Hydroxysäuren und Zucker, die beispielsweise mit Borkomplexen und mit Phosphat P-Zuckerester bilden, Proteinhydrolysate, Huminstoffe, die aus natürlichem Ausgangsmaterial genommen wurden bzw. synthetisch hergestellt werden können. Auch Modifikationen, Fraktionen bzw. Vorstufen der genannten Verbindungen können einzeln oder im Gemisch in den Schichtgitterverbindungen enthalten sein.

Andere als Düngemittel bereits verwendete organische Verbindungen, wie beispielsweise Harnstoff und Glyzerophosphate, können in den erfindungsgemässen Verbindungen ebenfalls vorkommen.

Die Angabe der organischen Bestandteile als Molanteile soll vergegenwärtigen, dass diese vorwiegend in der Kompositionsverbindung integriert sind, so z. B. gar keine bzw. verminderte Lösungseigenschaften in Wasser besitzen etc. Gelegentlich ist es aber vorteilhafter, den organischen Anteil in Gewichtsprozenten bezogen auf die anorganische Matrix anzugeben; dies gilt vor allem bei geringen organischen Anteilen und/oder hochmolekularen bzw. nicht eindeutig definierten (z. B. Huminsäure) organischen Substanzen.

Ferner ist darauf hinzuweisen, dass die erfindungsgemässen Kompositionsverbindungen einen Kristallwasseranteil aufweisen, dessen genaue analytische Bestimmung mit Schwierigkeiten verbunden ist, da neben den Hydroxylgruppen auch sehr locker gebundene Wassermoleküle vorliegen. So kann es schon bei 60° C zu Dehydratisierungserscheinungen kommen. Dieser relativ „flüchtige" Wasseranteil hängt stark von den Formulierungsbedingungen (Trockentemperatur und -dauer) sowie der Kristallinität und Teilchengrösse des fertigen Depotdüngers ab.

Die thermogravimetrische Analyse der Verbindungen ergibt, dass die Dehydratisierung der Substanzen im relativ grossen Bereich von 60 bis 240° C vonstatten geht, während die Dehydroxylierung bei Temperaturen von grösser 160° C für $Me^{2+}$-reiche (hier kann es zu gleitenden Übergängen zwischen Dehydratisierung und Dehydroxylierung kommen), bei Substanzen mit x-Werten von 0,2-0,6 aber erst oberhalb 280° C erfolgt. Geht man zu den $Me^{3+}$-reichen Kompositionsverbindungen über, so kommt noch eine zweite Dehydroxylierungsstufe bei Temperaturen oberhalb 400° C hinzu.

Gegenstand der vorliegenden Erfindung sind ferner Verfahren zur Herstellung der Depotdüngemittel der allgemeinen Formel

$$x\,Me(II)O \cdot \frac{1-x}{2} Me(III)_2O_3 \cdot y\,A \cdot z\,I \cdot aq$$

Es besteht einmal die Möglichkeit, eine zwei- und/oder dreiwertige Metallsalzlösung im gewünschten Verhältnis mit äquivalenten Mengen oder im Überschuss an Alkalien, ggf. mit Alkalimetallaten, normal, invers oder gleichzeitig bei Temperaturen bis 100° C zu fällen, wobei die anorganischen Anionen und die organischen Komponenten mit vorgelegt, gleichzeitig oder nach der Fällung oder ggf. nach Abtrennung der Mutterlauge des Wirtsgitters zugegeben werden können.

Ein weiteres Verfahren besteht darin, dass basische Salze der zwei- und/oder dreiwertigen Metalle mit der Säureform der anorganischen und ggf. organischen Ionen bei Temperaturen bis 100° C an der Luft behandelt und diese ggf. nach einer vorhergehenden Alkalisierung im Autoklaven bei Temperaturen bis zu 350° C bis zu 12 h lang erhitzt werden.

Natürlich können auch Kombinationen der beiden Herstellungsverfahren durchgeführt werden, wobei auch Salze der anorganischen wie organischen Ionen zum Einsatz gelangen können.

Die so hergestellten Präparate können direkt in Suspensionsform zur Anwendung gelangen. Bei der Aufarbeitung zur Pulverform ist es empfehlenswert, die Depotdünger sprühzutrocknen. Herkömmliche Trockenaggregate (Trockenschränke etc.) führen in der Regel zu glasigen, harten Produkten, die naturgemäss einen erhöhten Mahlaufwand benötigen. Dies ist auf den teilweise amorphen Charakter der Präparate zurückzuführen. So hat es sich generell als vorteilhaft erwiesen, vor der Trocknung organische Hilfsmittel zuzusetzen. In diesem Sinne wirken auch die beanspruchten Komplexbildner, so dass sich in der Regel andere Eindick-, Trocken- und Mahlhilfsmittel erübrigen.

Bei der Mahlung sind schlagende bzw. desintegrierende Aggregate bevorzugt (Bauermeistermühle, Dampfstrahlmühle etc.); Druckmahlungen (Raymondmühle etc.) neigen vor allem bei höherem Wassergehalt der Präparate zum Verkleben und Verbacken der Substanzen.

Für die Endformulierung der Präparate kann man je nach Einsatzgebiet (Trocken- oder Flüssigdüngung) auf allgemeine Grundrezepturen der Pflanzenschutz- und Düngerformulierung zurückgreifen. Zusätze von Ligninsulfonaten führen im Falle einer späteren Flüssigdüngung zu hervorragenden stabilen Spritzsuspensionen.

Als Ausgangsverbindungen bei der Herstellung der erfindungsgemässen Depotdünger können für die zweiwertigen Metalle ihre Hydroxide, Hydroxysalze, Carbonate, basische Carbonate, Sulfate, Nitrate, Chloride, Formiate, Acetate, Oxalate und andere organische Verbindungen sowie ihre aktiven Oxide dienen. Zink kann ferner als Alkalizinkat eingesetzt werden.

Die dreiwertigen Metalle können als Oxidhydroxide, Hydroxide, Hydroxysalze, Carbonate, basische Carbonate, Nitrate, Chloride, Sulfate, Formiate, Acetate, Oxalate bzw. organische Carboxylate zum Einsatz gelangen, Aluminium auch als Alkalialuminat. Die restlichen anorganischen wie organischen Bestandteile der Depotdünger werden entweder in ihrer Salzform oder direkt als Säuren eingesetzt. Ausnahmen bilden solche Substanzen

wie Harnstoff, die als neutrale Molekel zum Einsatz kommen.

Als Fällungsmittel können alkalisch reagierende Substanzen, bevorzugt Natronlauge, Soda, Ammoniak, Ammoniumcarbonat oder deren Gemische, eingesetzt werden.

Die erfindungsgemässen Kompositionsverbindungen können sowohl als direkt wirkende Pflanzendünger als auch als indirekt wirkende Bodendünger (Boden- und Substratverbesserungsmittel) eingesetzt werden. Ausser bei der Blattdüngung entfalten sie im allgemeinen beide Wirkungen gleichzeitig, zumal die Nährstofffreisetzung meistens langsam und nachhaltig fliessend erfolgt.

Als Spezialdepotdünger für gärtnerische Kultursubstrate und Erden sind die erfindungsgemässen Kompositionsverbindungen besonders geeignet. Die Nährstoffmobilisierung aus ihnen erfolgt hierbei vornehmlich durch Wurzelausscheidungen von $H^+$ und $HCO_3^-$ sowie durch organische Wurzelexudate. Gegenüber herkömmlichen Depotdüngern wie solchen auf Basis von Harnstoffkondensaten ist die Nährstoffzulieferung aus dem neuen Dünger weitgehend unabhängig von der mikrobiellen Aktivität im Kulturmedium. Es kommt daher bei hohen Temperaturen nicht zu überhöhten, wachstumsschädigenden Stickstoffüberangeboten im Substrat.

Die Anionenadsorptionskapazität von Kultursubstraten und gärtnerischen Erden ist im Vergleich zum Kationensorptionsvermögen nur sehr geringfügig ausgeprägt. Von den stets oder meist als Anion aufgenommenen Pflanzenhauptnährstoffen Stickstoff, Phosphor und Schwefel kommt Nitrat fast ausschliesslich in gelöster bzw. leicht löslicher Form vor allem in der wässerigen Phase von Kulturmedien vor.

Bei hohen Niederschlägen bzw. bei starkem Bewässern unterliegt das Nitrat deshalb, vor allem in Zierpflanzensubstraten, relativ rasch einer Auswaschung (J. Sou-Kup, Ztschr. Pflanzenern. und Bodenk. 120, 167, 1968). Die so verursachten erheblichen Stickstoff-Verluste wirken vielfach wachstumseinschränkend.

Durch den Einsatz von nitratbeladenen Ionenaustauscherharzen, deren Verwendbarkeit aus Kostengründen begrenzt ist, konnte in gärtnerischen Substraten (nach E. Poulsen, Physiol. Plant. 12, 826, 1959) folgende positive Beobachtungen ermittelt werden, die für $NO_3$-haltige Kompositionsverbindungen ebenfalls zutreffen:

a) Ausbleiben der bei normaler üblicher Düngung sonst auftretenden Schwankungen im Nitrat Stickstoff-Gehalt des Kulturmediums zwischen den beiden Extremen: pflanzenschädigender Überschuss an Nitrat-Ionen in der Substratlösung bzw. ertragsmindernder Stickstoff-Mangel durch zuvor erfolgte Auswaschung des Stickstoffs.

b) Es ist auf dem Wege über vorgenannten Nitratdünger möglich, zusätzlich Stickstoff zuzuführen, ohne die Ionenkonzentration der Substratlösung wesentlich zu erhöhen. Hierdurch wird bei Jungpflanzen sowie salzempfindlichen Pflanzen die Kultursicherheit beträchtlich heraufgesetzt.

c) Die mit nitrathaltigen Kompositionsverbindungen gedüngten Pflanzen können häufiger und kräftiger bewässert werden, ohne starke Stickstoff-Verluste durch Nitrat-Stickstoff-Auswaschung bzw. Denitrifikation befürchten zu müssen, wie bei herkömmlicher Stickstoff-Düngung (Unterbindung der Eutrophierung von Gewässern).

d) Die Nitrataufnahme durch die Wurzeln der Pflanzen erfolgt im allgemeinen kontrinuierlicher und bedarfsgerechter, da die Nitratfreisetzung aus dem Dünger mit der jeweiligen Aktivität der Wurzelrespiration in engem Zusammenhang steht. Im Gegensatz dazu sind zur Bereitstellung von Stickstoff aus handelsüblichen Harnstoffkondensaten vorherige mikrobielle Umsetzungen erforderlich, die von der Temperatur und Feuchte im Kulturmedium stark abhängig sind.

Hieraus ergeben sich immer wieder Schwierigkeiten in Folge einer Über- oder Unterversorgung der Pflanzen mit Stickstoff. Eine Kultursteuerung wird im Erwerbsbetrieb hierdurch vielfach unkalkulierbar.

Erfindungsgemässe, nitratenthaltende Kompositionsverbindungen kommen dem Ideal eines Stickstoff-Düngers sehr nahe, weil sich Pflanzen durch Eintausch der von Wurzeln ausgeschiedenen Hydrogencarbonat-Ionen den lebensnotwendigen Stickstoff in bedarfsgerechter Höhe selbst beschaffen können. Aus der Sicht seines Wirkungsgesetzes der Wachstumsfaktoren heraus fordert E.A. Mitscherlich (E.A. Mitscherlich: Bodenkunde, P. Parey, Berlin/Hamburg 1954; E. Deichmann: ABC der Pflanzenernährung und Düngung, Jaegersche Buchdruckerei Speyer 1949) schon seit langem einen „neuartigen Dünger, der während der ganzen Wachstumszeit laufend Salpeter an die Pflanzenwurzeln abgibt", weil hierdurch die Erträge von Pflanzen ganz erheblich heraufgesetzt werden können, ohne dass die Stickstoff-Düngung in Teilgaben gestaffelt verabreicht werden muss, was hohen Arbeits- und Zeitaufwand erforderlich macht.

Aufgrund der bereits geschilderten Vorzüge der mit Pflanzennährstoffen beladenen erfindungsgemässen Kompositionsverbindungen eignen sich diese hervorragend auch als Langzeitdünger in Lösungskulturen (Hydrokulturen) und Inertsubstraten (Kies, Leca-Ton, Quarzsand), wo herkömmliche Stickstoff-Depotdüngen in Folge mangelhafter mikrobieller Umsetzungen als Stickstoffdünger versagen.

Die Nährstoffbereitstellung aus den beanspruchten Depotdüngen erfolgt hier ausser über Wurzelausscheidungen von $H^+$ und $HCO_3^-$ auch durch Austausch gegen Ionen, die in dem verwendeten Wasser enthalten sind. Die für Hydrokulturen bisher als Depotdüngen (kurz genannt Hydrodünger) verwendeten nährstoffbeladenen Ionenaustauscherharze sind relativ teure Produkte. Durch den Einsatz billigerer, neuartiger erfindungsgemässer Kompositionsverbindungen als Depotdünger würde das arbeits- und zeitsparende Hydrokulturverfahren an Attraktivität gewinnen. Dieses trifft sowohl für Hydrokulturen zu, die im

Erwerbsgartenbau unterhalten, als auch für Hydrokulturen von Zierpflanzen, die in Wohnungen aufgestellt sind. Durch die erfindungsgemässen Depotdünger wird die Hydrokultur von Gemüse und Gewürzkräutern als Freizeitbeschäftigung und Hobby eine neue Belegung erfahren, auch dadurch, dass die Bestandteile der Kompositionsverbindung praktisch ausschliesslich Pflanzennährstoffe sind und somit Befürchtungen hinsichtlich eines Auftretens von toxikologisch bedenklichen Rückständen aus dem Dünger in den verzehrbaren Pflanzenteilen nicht bestehen.

Preisgünstige Hydrokultur-Depotdünger werden dazu beitragen, dass auch der Balkonkastenbereich künftig viel mehr als bisher in Hydrokultur betrieben wird, zumal sich hier mit Hilfe eines elektrischen Magnetventils in der Wasserzufuhr und eines Wasserstandreglers auch längere Urlaubszeiten ohne Pflegeaufwand gut überbrücken lassen.

Die erfindungsgemässen Depotdüngemittel eignen sich hervorragend auch als Blattsuspensionsdünger mit einer bedeutend längeren Wirksamkeit als herkömmliche Blattflüssigdünger. Die Pflanzenverträglichkeit der Kompositionsverbindungen ist wegen niedriger Salzkonzentrationen auf dem Blatt wesentlich besser als die von normalen Blattdüngern.

Eine Kombination der erfindungsgemässen Depotdüngemittel mit herauslösenden und komplexbildenden Substanzen führt in Blattdüngersystemen vielfach zu Wirkungsverbesserungen. Als Kombinationspartner bieten sich beispielsweise an: Zitronensäure, Äpfelsäure, Asparaginsäure, Phthalsäure, Aminopolycarbonsäure darunter auch Diethylentriaminpentaessigsäure, Ligninsulfonate. Bei Eisen enthaltenden Depotdüngemitteln eignet sich vor allem Zitronensäure wegen seiner komplexierenden und zugleich reduzierenden Eigenschaften besonders als Zusatzstoff, zumal Eisen oft hauptsächlich in Zitronen- (und Äpfel)-säure gelöst oder komplexiert in Pflanzen verlagert wird.

Blattdünger werden im Handel vor allem in Form flüssiger Blattdünger sowie als wasserlösliche Düngesalze vertrieben. Neuere Depotblattdünger werden vornehmlich als Suspensionen und Pasten angeboten, wobei die beiden letzteren aus Düngesalzteilchen bestehen, deren Kristallisation durch spezielle Kristallisationshemmersysteme verhindert wird. Die Verwendung von Blattdüngern in Staubform ist bekannt (P. Guest, H. Chapman, Proc. Amer. Soc. Hort. Sci. 54, 573-582, 1949), hat aber bisher keine praktische Bedeutung erlangt.

Die Anwendung der neuen Depotdüngemittel, die in ihrer Matrix bzw. eingelagert Pflanzennährstoffe enthalten, stellt somit eine neue Art der Depotblattdüngung in Suspensionsform dar.

Gegenüber bestehenden Flüssigblattdüngern weisen die erfindungsgemässen Depotdüngemittel die Vorteile auf, die auch Depotblattdünger besitzen, wie eine bessere Pflanzenverträglichkeit, höhere Nährstoffausbringungsraten, längere Nachwirkung.

Im Vergleich zu bestehenden handelsüblichen Depotblattdüngern in Suspensions- und Pastenform bieten die neuen erfindungsgemässen Blattdepotdünger folgende Vorzüge:

a) Einfachere Formulierung und Konditionierung, da kein kompliziertes, ausgeklügeltes Kristallhemmersystem erforderlich ist wie bei Düngesalzkristallsuspensionen und -pasten.

b) Problemloseres Kombinieren der Kompositionsverbindungen mit verschiedenartigen Pflanzennährstoffen zu Mehrnährstoffdüngern bzw. Spurennährstoffmischdüngern.

c) Verstärkter Schutz gegen photochemische Zersetzung von Schwermetallkomplexen bei starker Sonneneinstrahlung, wie sie beispielsweise vom Citrat-Fe(III)-Komplex bekannt sind (J. Frahn, Austral. Journ. Chemistry 11, 399-405, 1958).

d) Vermehrter Schutz der Metallionen des aufgespritzten Blattdüngers gegenüber Oxidationen, zumal die niederwertige Form, wie $Fe^{++}$, oft wirksamer ist.

e) Pulverform ermöglicht günstigere Bedingungen für Lagerung, Verpackung, Versand und Dosierung.

Zur Verbesserung von Aufnahme und Verteilung von Mikronährstoffen, wie Fe, Mn, Cu, Zn oder Sekundärnährstoffen, wie Ca und Mg, erfolgen zusätzliche Gaben von Komplexbildnern zu den erfindungsgemässen Blattdepotdüngern. Hierbei können die bereits vorn genannten Substanzen mit komplexbildenden Eigenschaften eingesetzt werden.

Als Formulierungshilfsstoffe sind oberflächenaktive Verbindungen, vornehmlich nichtionische reaktionsträge Tenside zur Gewährleistung einer guten Verteilung und Aufnahme der übers Blatt applizierten Pflanzennährstoffe von grosser Bedeutung, zumal durch ihren Einsatz lokale Überkonzentrationen auf Blättern, die zu Schädigungen führen könnten, vermieden werden.

Um Schwermetall-Spurennährstoffe in der Pflanze in einer besser aufnehmbaren und verlagerbaren niederwertigen Form zu erhalten, können den erfindungsgemässen Depotblattdüngern auch reduzierend wirkende Substanzen, wie z. B. Ligninsulfonate, Zitronensäure, organische Säuren mit oxidierbaren phenolischen OH-Gruppen bzw. Vorstufen davon, die in der Pflanze in vorgenannte Verbindungen mittels Hydrolasen überführt werden, zugesetzt werden.

Zur Aufnahmebeschleunigung kann den erfindungsgemässen Depotblattdüngern auch $MgCO_3$ zugesetzt werden, was vor allem auf stark wachsüberzogenen Blättern Wirkungssteigerungen zur Folge haben kann, da die Wachsschicht vermindert wird.

Feuchteanziehende bzw. -haltende Substanzen, sogenannte Stikker wie Glyzerin können gleichfalls erfindungsgemässen Depotblattdüngern zugesetzt werden, da die Wirkung einer Blattdüngung wesentlich davon abhängt, dass der Spritzbelag auf den Blättern möglichst lange in Lösung bleibt, um so eine bessere, langfristigere Aufnahme der Nährstoffe zu gewährleisten. Erwünscht sind solche Zusätze vor allem bei Standorten mit hoher Lufttrockenheit und geringer Taubildung.

Den erfindungsgemässen als Depotblattdünger verwandten Kompositionsverbindungen können auch Dünger in normaler, leichtlöslicher oder schwerlöslicher Salzform in nichtphytotoxischen Konzentrationen zugemischt werden. Hierdurch kann beispielsweise der leichter lösliche Anteil des Blattdüngers erhöht werden.

Erfindungsgemässe Kompositionsverbindungen können auch als Bestandteile in bekannten Kristallsuspensions- oder Kristallpasten-Depotblattdüngern sein und hierin die langsam wirksame Komponente verstärken.

Die genannten verschiedenen Dünger bestehend aus den Kompositionsverbindungen können neben der Slurryform als Pulver und Granulat formuliert angeboten und angewandt werden, aber auch in anwendungsorientierter Form als Körper wie Keil, Scheibe, Band, und in einer Einbettung aus Textil, aus einem hydrophilen Polymer oder Gel.

Nachfolgend wird die Erfindung beispielhaft erläutert.

*Beispiel 1:*

Zu 192,3 g $(Mg(NO_3)_2$ 6 $H_2O$, gelöst in 1500 ml $H_2O$, wird eine Lösung bestehend aus 97,5 ml $Na_{1,48}Al(OH)_{4,48}$-Lösung (400 g $Al(OH)_3$/l) und 10,4 g NaOH (aufgefüllt auf 300 ml $H_2O$), im Verlauf von 15 min unter Rühren zugegeben. Der pH-Wert wird nach einer kurzen Nachrührzeit (15 min) durch Zugabe entweder von Natronlauge oder Salpetersäure auf 8,5 eingestellt bzw. nachkorrigiert. Die Suspension wird noch weitere 3 h in Bewegung gehalten, dann abfiltriert, der Filterkuchen gewaschen, sprühgetrocknet und gemahlen.

$$\text{System: } x\ MgO\ \frac{1-x}{2}\ Al_2O_3\ y\ N_2O_5\ aq$$

x: 0,6
y: 0,2
aq: 2,0 (wie in allen Beispielen (1 bis 16) durch Vorversuche ermittelt)

| *Analyse:* | Gew.-% |
|---|---|
| MgO | 23,7 (0,602) |
| $Al_2O_3$ | 20,3 (0,203) |
| $N_2O_5$ | 19,6 (0,186) |
| $H_2O$ | 36,2 (2,0) |

*Beispiel 2:*

93,312 g $Mg(OH)_2$ und 40,784 g $Al(OH)_3$ werden in 200 ml $H_2O$ aufgeschlämmt, mit halbkonzentrierter Salpetersäure (25,205 g $HNO_3$) versetzt und homogenisiert (Dauer: bis pH $\geqslant$ 6). Die komplette Umsetzung erfolgt im Autoklaven (6 h, 300° C, ca. 86 bar). Die anschliessende Aufarbeitung besteht aus der Trocknung (120° C) und der Mahlung.

$$\text{System: } x\ MgO\ \frac{1-x}{2}\ Al_2O_3\ y\ N_2O_5\ aq$$

x: 0,8
y: 0,1
aq: 1,5

| *Analyse:* | Gew.-% |
|---|---|
| MgO | 39,7 (0,79) |
| $Al_2O_3$ | 12,7 (0,1) |
| $N_2O_5$ | 13,2 (0,099) |
| $H_2O$ | 34,6 (1,5) |

*Beispiel 3:*

49,4 g $Ca(OH)_2$ und 25,97 g $Al(OH)_3$ werden mit 100 ml Wasser angeteigt, mit halbkonzentrierter Salpetersäure (12,6 g $HNO_3$) versetzt und homogenisiert. Die Reaktion erfolgt im Autoklaven (4 h, 300° C, ca. 86 bar). Das Produkt wird anschliessend nur noch getrocknet (120° C) und gemahlen.

$$\text{System: } x\ CaO\ \frac{1-x}{2}\ Al_2O_3\ y\ N_2O_5\ aq$$

x: 0,667
y: 0,1
aq: 1,5

| *Analyse:* | Gew.-% |
|---|---|
| CaO | 39,6 (0,660) |
| $Al_2O_3$ | 18,0 (0,165) |
| $N_2O_5$ | 11,3 (0,098) |
| $H_2O$ | 31,1 (1,6) |

*Beispiel 4:*

12,37 g $Ca(OH)_2$ werden in 100 ml Wasser suspendiert und sodann mit Salpetersäure in leichtem Überschuss (22 g $HNO_3$) gelöst. In diese Vorlage werden zwei Lösungen (Lösung A: 64,9 ml $Na_{1,48}Al(OH)_{4,48}$ (400 g $Al(OH)_3$/l, Lösung B: 37,05 g $Ca(OH)_2$ suspendiert in 1000 ml $H_2O$) so dosiert, dass stets ein Ca/Al-Verhältnis von 2:1 aus dem Zusammenlauf der beiden Lösungen resultiert (Dosierdauer: ca. 30 min). Sodann wird der pH-Wert langsam mit 63 gew.-%iger Salpetersäure auf 9,0 abgesenkt und die Suspension noch 3 h lang nachgerührt. Die Aufarbeitung umfasst die üblichen Schritte (Filtrieren, Waschen und Trocken (120° C) und Mahlen).

$$\text{System: } x\ CaO\ \frac{1-x}{2}\ Al_2O_3\ y\ N_2O_5\ aq$$

x: 0,667
y: 0,167
aq: 2,0

| *Analyse:* | Gew.-% |
|---|---|
| CaO | 34,1 (0,640) |
| $Al_2O_3$ | 16,5 (0,170) |
| $N_2O_5$ | 15,6 (0,152) |
| $H_2O$ | 35,5 (1,96) |

*Beispiel 5:*

In 500 ml $H_2O$ werden 168,7 g $Ca(NO_3)_3 \cdot 4H_2O$, 67 g $Al(NO_3)_3 \cdot 9H_2O$ und 72,14 g $Fe(NO_3)_3 \cdot 9H_2O$ gelöst und im Verlauf von 30 min mit 45 gew.-%iger NaOH gefällt (End-pH-Wert: 12,0). Die Suspension wird noch 6 h lang in Bewegung gehalten, sodann abfiltriert und mit $H_2O$ Nitrat-frei gewaschen. Der verflüssigte Filterkuchen wird sprühgetrocknet und abschliessend gemahlen.

$$\text{System: } x\ CaO\ \frac{1-x}{2}\ Me_2O_3\ y\ N_2O_5\ aq$$

x: 0,667
Me: 0,5 $Al^{3+}$ + 0,5 $Fe^{3+}$
y: 0,167
aq: 2,0

| *Analyse:* | Gew.-% |
|---|---|
| CaO | 32,2 (0,645) |
| $Al_2O_3$ | 7,6 (0,084) |
| $Fe_2O_3$ | 12,0 (0,084) |
| $N_2O_5$ | 15,7 (0,163 |
| $H_2O$ | 32,4 (2,0) |

*Beispiel 6a:*

In 2000 ml Wasser werden gelöst:

g
47,7 $ZnCl_2$
59,7 $CuCl_2 \cdot 2H_2O$
208,8 $FeCl_2 \cdot 4H_2O$
207,8 $MnCl_2 \cdot 4H_2O$
21,64 $H_3BO_3$

Die Lösung wird unter Rühren auf 70° C erhitzt, mit 250 ml einer Molybdatlösung (30,89 g $(NH_4)_6Mo_7O_{24}\ 4H_2O$) versetzt und sofort mit 45 gew.-%iger Natronlauge gefällt (End-pH-Wert: ca. 9). Gegen Ende der Fällung wird die Suspension so lange mit Luft begast, bis sich ein $Fe^{2+}/Fe^{3+}$-Verhältnis von ca. 2,0 einstellt; anschliessend wird mit Stickstoff weiter beschleiert. Die Suspension wird noch 6 h auf 70° C gehalten, anschliessend abfiltriert, der Filterkuchen $Cl^-$-frei gewaschen, sprüngetrocknet und gemahlen.

$$\text{System: } x_1\ ZnO\ x_2\ CuO\ x_3\ FeO\ x_4\ MnO\ \frac{1-x}{2}\ Fe_2O_3\ y_1\ B_2O_3\ y_2\ MoO_3\ aq$$

$x_1$: 0,125 ($x=x_1+x_2+x_3+x_4$)
$x_2$: 0,125
$x_3$: 0,25
$x_4$: 0,375
$y_1$: 0,0625
$y_2$: 0,0625
aq: 1,0

| *Analyse:* | Gew.-% | |
|---|---|---|
| Zn | 7,6 (0,123) | |
| Cu | 7,6 (0,126) | |
| Fe | 20,2 (0,38) | ($Fe^{2+}/Fe^{3+}$: 2,09) |
| Mn | 19,4 (0,37) | |
| B | 1,2 (0,117) | |
| Mo | 5,2 (0,06) | |
| $H_2O$ | 16,8 (0,987) | |

*Beispiel 6b:*

Der Filterkuchen, hergestellt nach Beispiel 6a, wird unter $N_2$-Atmosphäre in Wasser aufgeschlämmt und mit 2,0 Gew.-% Komplexon-III (Di-Natriumsalz der EDTA), bezogen auf den Mikronährstoffdünger, versetzt und kurz gerührt. Die weitere Aufarbeitung erfolgt analog Beispiel 6a.

Die Analyse der Filtrat- und Waschwässer ergibt, dass die Komplexbildner annähernd quantitativ (ca. 98%) absorbiert wird.

*Beispiel 7a:*

In 2000 ml Wasser werden gelöst:

g
47,4 $ZnCl_2$
59,7 $CuCl_2 \cdot 2H_2O$
139,1 $FeCl_2 \cdot 4H_2O$
94,6 $FeCl_3 \cdot 6H_2O$
207,8 $MnCl_2 \cdot 4H_2O$
21,64 $H_3BO_3$

Die Lösung wird unter einer Schutzgasatmosphäre ($N_2$) gerührt und auf 70° C aufgeheizt. Sodann werden 300 ml einer Molybdatlösung (30,89 g $(NH_4)_6Mo_7O_{24}\ 4H_2O$) und 300 ml 45 gew.-%ige NaOH-Lösung synchron im Verlaufe von 15 min hinzugegeben. Mit weiterer NaOH-Lösung wird der pH-Wert auf 9 angehoben und die Suspension noch 2 h lang bei 70° C gerührt. Nach dem Filtrations- und Waschschritt wird das Präparat sprühgetrocknet und gemahlen.

System ≙ Beispiel 6a.

| *Analyse:* | Gew.-% | |
|---|---|---|
| Zn | 7,7 (0,124) | |
| Cu | 7,6 (0,125) | |
| Fe | 20,2 (0,38) | ($Fe^{2+}/Fe^{3+}$: 1,98) |
| Mn | 19,8 (0,38) | |
| B | 1,2 (0,12) | |
| Mo | 5,5 (0,06) | |
| $H_2O$ | 16,2 (0,95) | |

*Beispiel 7b:*

Der Filterkuchen, hergestellt nach Beispiel 7a, wird unter $N_2$-Atmosphäre in Wasser aufgeschlämmt und mit 4 Gew.-% Na-Ligninsulfonat, bezogen auf den Mikronährstoffdünger, versetzt und ca. 30 min lang gerührt. Die Suspension wird dann abfiltriert, kurz nachgewaschen und der verflüssigte Filterkuchen sprühgetrocknet und gemahlen.

Aus dem C-Gehalt in der Mutterlauge und dem Waschwasser ergibt sich ein Adsorptionsanteil von ca. 85% des Ligninsulfonats am Feststoff.

*Beispiel 8a:*

In 2000 ml $H_2O$ werden gelöst:

g
47,7 $ZnCl_2$
59,7 $CuCl_2 \cdot 2H_2O$
139,1 $FeCl_2 \cdot 4H_2O$
94,6 $FeCl_3 \cdot 6H_2O$
207,8 $MnCl_2 \cdot 4H_2O$
43,3 $H_3BO_3$

Unter $N_2$-Atmosphäre wird die Lösung auf 85° C erhitzt und sodann mit 600 ml einer Molybdatlösung (61,78 g $(NH_4)_6Mo_7O_{24} \cdot 4H_2O$ enthaltend) versetzt. Während die Mo-haltige Lösung zufliesst, wird auch die Fällung mit 45 gew.-%iger Natronlauge durchgeführt (End-pH-Wert: 8,5-9,0). Nach der Filtration und dem Waschschritt ($Cl^-$-Freiheit) wird das Präparat sprühgetrocknet und gemahlen.

System: $x_1$ ZnO $x_2$ CuO $x_3$ FeO $x_4$ MnO $\frac{1-x}{2}$

$Fe_2O_3$ $y_1$ $B_2O_3$ $y_2$ $MoO_3$ aq

$x_1$: 0,125 ($x=x_1+x_2+x_3+x_4$)
$x_2$: 0,125
$x_3$: 0,25
$x_4$: 0,375
$y_1$: 0,125
$y_2$: 0,125
aq: 1,0

| *Analyse:* | Gew.-% | |
|---|---|---|
| Zn | 6,6 (0,122) | |
| Cu | 6,5 (0,124) | |
| Fe | 17,9 (0,39) | ($Fe^{2+}/Fe^{3+}$: 2,2) |
| Mn | 17,1 (0,38) | |
| B | 2,0 (0,22) | |
| Mo | 9,4 (0,12) | |
| $H_2O$ | 17,3 (1,16) | |

*Beispiel 8b:*

Der Filterkuchen, hergestellt nach Beispiel 8a, wird unter Schutzgasatmosphäre ($N_2$) in Wasser aufgeschlämmt und mit 5 gew.-%iger Huminsäure, bezogen auf den Mikronährstoffdünger, versetzt. Nach 2stüngider Rührzeit wird die Suspension filtriert, kurz nachgewaschen, wieder verflüssigt, sprühgetrocknet und gemahlen. Die C-Analyse ergibt, dass ca. 96% des Komplexbildners vom Präparat aufgenommen worden sind.

*Beispiel 9:*

Zu einer Lösung von 4 g Na-Ligninsulfonat und 4 g Na-Huminat in 800 ml $H_2O$ werden in einer $N_2$-Atmosphäre und unter Rühren bei Raumtemperatur die Lösungen

a) 0,434 g $ZnCl_2$
+ 12,558 g $MnCl_2 \cdot 4H_2O$
+503,5 ml $FeCl_2$-Lösung (360,0 g/l) mit $H_2O$ verdünnt auf 800 ml und
b) 0,542 g $CuCl_2 \cdot 2H_2O$ in 100 ml $H_2O$ gelöst in 60 min zudosiert. Gleichzeitig wird eine Lösung
c) 7,20 g $MoO_3$
+76,37 g $Na_2B_4O_7 \cdot 10H_2O$
+49,6 g Na-Aluminat (51,4% $Al_2O_3$, 46,98 g NaOH)
+ 460 ml 4,75 M NaOH-Lösung
mit $H_2O$ auf 800 ml verdünnt – so zudosiert, dass der pH-Wert = 9,5 ± 0,5 gehalten wird.

Anschliessend wird die Suspension noch 18 h unter Rühren und unter Schutzgas bei Raumtemperatur gehalten.

Der Niederschlag wird filtriert, Chlorid-frei gewaschen, getrocknet und gemahlen.

System: x MeO $\cdot \frac{1-x}{2}$

$Al_2O_3 \cdot y_1 B_2O_3 \cdot y_2 MoO_3 \cdot aq$

x: 0,75
$y_1$: 0,2
$y_2$: 0,025
(Me = Fe/Mn/Zn/Cu = 450/20/1/1)
aq: 1,0

| *Analyse:* | Gew.-% |
|---|---|
| Fe | 36,6 (0,715) |
| Mn | 1,6 (0,032) |
| Zn | 0,096 (0,016) |
| Cu | 0,095 (0,016) |
| Al | 6,2 (0,25) |
| B | 1,9 (0,19) |
| Mo | 2,1 (0,024) |
| $H_2O$ | 20,3 (1,23) |
| $C_{org.}$ | 0,8 (0,073) |

*Beispiel 10:*

3,3 g Na-Ligninsulfonat und 3,3 g Na-Huminat werden in 800 ml $H_2O$ gelöst. Zu dieser Lösung dosiert man unter Rühren und $N_2$-Beschleierung bei Raumtemperatur in 60 min simultan die Lösungen

a) 1,64 g $ZnCl_2$
+26,13 g $MnCl_2 \cdot 4H_2O$
+511,3 ml $FeCl_2$-Lösung in $H_2O$ gelöst und auf 800 ml verdünnt
b) 0,45 g $CuCl_2 \cdot 2H_2O$ in 100 ml $H_2O$ und
c) 0,46 g $Na_2B_4O_7 \cdot 10H_2O$
+0,058 g $MoO_3$
+20,4 g Na-Aluminat (51,4% $Al_2O_3$, 46,98% NaOH)
+575 ml 4,75 M NaOH-Lösung mit $H_2O$ auf 800 ml verdünnt

Die Lösung c wird dabei so zugesteuert, dass man in dem pH-Wert-Bereich = 8,5-9,5 bleibt.

Die Suspension wird noch 18 h unter Rühren und Schutzgas bei Raumtemperatur gehalten.

Anschliessend wird der Niederschlag abfiltriert, Chlorid-frei gewaschen, getrocknet und gemahlen.

System: x MeO $\cdot \frac{1-x}{2}$

$Al_2O_3 \cdot y_1 B_2O_3 \cdot y_2 MoO_3 \cdot aq$

x: 0,8
$y_1$: 0,0012
$y_2$: 0,0002
(Me = Fe/Mn/Zn/Cu = 550/505/1)
aq: 1,0

| *Analyse:* | Gew.-% |
|---|---|
| Fe | 36,2 (0,726) |
| Mn | 3,25 (0,066) |
| Zn | 0,38 (0,0065) |
| Cu | 0,075 (0,0013) |
| Al | 4,8 (0,20) |
| B | 0,022 (0,0023) |
| Mo | 0,015 (0,00018) |
| $H_2O$ | 21,0 (1,3) |
| $C_{org.}$ | 0,8 (0,075) |

*Beispiel 11:*

57,6 g $FeSO_4 \cdot 7H_2O$, 32,5 g $Al(OH)_3$ und 1,3 g Na-Ligninsulfonat werden gut gemischt und mit 100 ml Wasser angeteigt. Die Umsetzung erfolgt dann im Autoklaven (200° C, ca. 15,6 bar, 6 h). Das Reaktionsprodukt braucht nur noch getrocknet (120° C) und gemahlen zu werden.

System: x FeO $\cdot \frac{1-x}{2}$ $Al_2O_3 \cdot y\ SO_3$ aq

+ 2 Gew.-% Na-Ligninsulfonat

x: 0,333
y: 0,333
aq: 1,5

| *Analyse:* | Gew.- |
|---|---|
| Fe | 18,8 (0,333) |
| Al | 18,3 (0,67) |
| S | 10,5 (0,324) |
| $H_2O$ | 11,9 (0,654) |
| C | 1,4 (0,115) |

*Beispiel 12:*

Zu einer Suspension von 26,78 g $Ca(OH)_2$ in 400 ml $H_2O$ werden 33,1 g $Na_2(Fe(CN)_5NO) \cdot 2H_2O$ und 33,07 g Na-Aluminat (51,4% $Al_2O_3$, 46,98% NaOH) gegeben und 30 min gerührt. Im Verlauf von weiteren 30 min werden 66,89 g $CaCl_2 \cdot 6H_2O$ gelöst in 400 ml Wasser zudosiert. Die Suspension wird anschliessend bei 50° C 18 h gerührt, filtriert und gewaschen. Die Trocknung erfolgt bei 120° C; abschliessend wird gemahlen.

$$\text{System: } x_1 \text{ CaO } \frac{1-x}{2} Al_2O_3 \text{ y } Ca(Fe(CN)_5NO) \text{ aq}$$

x: $x_1+y$
$x_1$: 0,555
aq: 1,5

| *Analyse:* | Gew.-% |
|---|---|
| Ca | 25,3 (0,66) |
| Al | 8,5 (0,33) |
| Fe | 5,33 (0,10) |
| $H_2O$ | 29,5 (1,7) |

*Beispiel 13:*

Zu 303,8 ml $FeSO_4$-Lösung (200 g/l) werden 98,6 g $MgSO_4 \cdot 7H_2O$, 4,8 g Zitronensäure und 200 ml $H_2O$ gegeben und unter Schutzgas ($N_2$) so lange gerührt, bis sich alles gelöst hat. Die Fällung wird mit einer Lösung, bestehend aus 245,8 ml NaOH-Lösung (190 g/l) und 19,84 g Na-Aluminat (51,5% $Al_2O_3$, 46,98% NaOH) mit $H_2O$ auf 500 ml aufgefüllt, unter der Schutzgasatmosphäre durchgeführt, 2 h bei pH 8,5 nachgerührt, filtriert und gewaschen. Die Trocknung erfolgt unter Stickstoff bei 105° C.

$$\text{System: } x_1 \text{ FeO } x_2 \text{ MgO } \frac{1-x}{2} Al_2O_3 \text{ y } SO_3 \text{ z } C_6H_8O_7 \text{ aq}$$

x: $x_1 + x_2$
$x_1$: 0,4
$x_2$: 0,4
y: 0,1
z: 0,025
aq: 2,5

| *Analyse:* | Gew.-% |
|---|---|
| Fe | 19,5 (0,41) |
| Mg | 7,8 (0,38) |
| Al | 4,6 (0,2) |
| S | 3,2 (0,12) |
| C | 1,4 (0,14) |
| $H_2O$ | 40,9 (2,66) |

*Beispiel 14:*

4,8 g Zitronensäure werden in 400 ml Wasser gelöst und unter Schutzgas ($N_2$) gerührt. Sodann werden im Verlauf von 30 min eine Lösung A (569,6 ml $FeSO_4$-Lösung mit 200 g $FeSO_4$/l) und eine Lösung B (201,8 ml NaOH-Lösung (190 g/l) mit 24,8 g Na-Aluminat (R. d. Haen, 51,4% $Al_2O_3$, 46,98% NaOH)) so zudosiert, dass ein pH-Wert von ca. 8,5 stets eingehalten wird. Die Suspension wird noch unter Schutzgas 1 bis 2 h weitergerührt, danach abfiltriert und kurz gewaschen. Die Trocknung erfolgt im Vakuum bei 60° C.

$$\text{System: x FeO } \frac{1-x}{2} Al_2O_3 \text{ y } SO_3 \text{ z } C_6H_8O_7 \text{ aq}$$

x: 0,75
y: 0,125
z: 0,025
aq: 2,5

| *Analyse:* | Gew.-% |
|---|---|
| Fe | 34,2 (0,76) |
| Al | 5,25 (0,24) |
| S | 3,3 (0,128) |
| C | 1,4 (0,145) |
| $H_2O$ | 34,0 (2,3) |

*Beispiel 15:*

1000 ml Wasser, versetzt mit 333 g $FeSO_4$, $7H_2O$ und 133 g $Al_2(SO_4)_3 \cdot 18H_2O$, werden auf 85° C erhitzt und sodann unter Rühren unter Schutzgasatmosphäre ($N_2$) so lange mit 45 gew.-%iger Natronlauge versetzt, bis ein pH-Wert von 8,5 erreicht ist. Die Suspension wird noch 6 h auf 85° C gehalten. Anschliessend wird filtriert, sulfatfrei gewaschen, getrocknet (105° C) und gemahlen.

$$\text{System: x FeO } \frac{1-x}{2} Al_2O_3 \text{ y } SO_3 \text{ aq}$$

x: 0,75
y: 0,125
aq: 3,0

| *Analyse:* | Gew.-% |
|---|---|
| Fe | 30,1 (0,76) |
| Al | 4,8 (0,25) |
| S | 2,75 (0,121) |
| $H_2O$ | 45,1 (3,5) |

*Beispiel 16:*

Zu 506,3 ml $FeSO_4$-Lösung (240 g $FeSO_4$/l) werden unter $N_2$-Atmosphäre in 30 min 509,8 ml Na-Aluminat-Lösung (20,0 g $Al_2O_3$/l, 100 g NaOH/l) zudosiert. Anschliessend werden 1,4 g Zitronensäure (entspricht ca. 2 Gew.-% bezogen auf Depotdünger) zugegeben, die Suspension, falls nötig, mit Natronlauge auf einen End-pH-Wert von 8,5 gebracht, 2 h nachgerührt, filtriert, sulfatfrei gewaschen, der angemaischte Filterkuchen sprühgetrocknet und gemahlen.

$$\text{System: x FeO } \frac{1-x}{2} Al_2O_3 \text{ y } SO_3 \text{ aq}$$

+ 2 Gew.-% Zitronensäure

x: 0,8
y: 0,1
aq: 2,0

*Analyse:*

| | Gew.-% |
|---|---|
| Fe | 40,3 (0,81) |
| Al | 4,8 (0,2) |
| S | 3,15 (0,11 |
| C | 0,7 (0,065) |
| $H_2O$ | 29,0 (1,8) |

*Beispiel 17:*

Versuch mit nitrathaltigen Kompositionsverbindungen als N-Depotdünger in Quarzsand

Pflanze: Tomate, Sorte: „Rheinlands Ruhm", 3 Pflanzen/Topf, pikiert am 02.02.1980, 5fach wiederholt,

Substrat: Quarzsand, Dünger eingemischt,

Grunddüngung: N-Mangelnährlösung nach Hoagland-Arnon

| Präparat (nach Beispiel Nr.) | Präparat-Kennzeichnung | mq N/l Quarzsand | Erntezeitpunkt 21.04.1980 | | |
|---|---|---|---|---|---|
| | | | ⌀ Wuchshöhe in cm | ⌀ Frischgewicht in g | ⌀ Trockengewicht in g |
| 1 | Mg/Al/$NO_3$ | 75<br>150 | 18<br>20 | 7,1<br>7,8 | 1,0<br>1,1 |
| 3 | Ca/Al/$NO_3$ | 75<br>150 | 17<br>19 | 7,9<br>10,2 | 1,2<br>1,4 |
| 2 | Mg/Al/$NO_3$ | 75<br>150 | 18<br>21 | 9,0<br>13,1 | 1,2<br>1,6 |
| 5 | Ca/Al/Fe/$NO_3$ | 75<br>150 | 18<br>16 | 6,8<br>8,7 | 1,0<br>1,2 |
| Isodur (Vergleichs-N-Depotdünger) | $C_6H_{14}O_2N_4$ Isobutylidendiharnstoff | 75<br>150 | 12<br>16 | 4,1<br>8,5 | 0,6<br>1,0 |

Die Versuchsergebnisse zeigen, dass die nitrathaltigen Kompositionsverbindungen dem N-Depotdünger Isodur in der Wirkung überlegen sind, da letzterer in dem relativ sterilen Quarzsand mikrobiell nur wenig umgesetzt werden kann.

*Beispiel 18:*

Versuch mit nitrathaltigen Kompositionsverbindungen als N-Depotdünger in Torfkultursubstrat

Pflanze: Tomate, Sorte: „Rheinlands Ruhm", 3 Pflanzen/Topf,

pikiert am 21.11.1980, 5-fach wiederholt angesetzt

Substrat: Torfkultursubstrat: Düngetorf (Weisstorf) +3 g/l Kalkmergel

Grunddüngung: N-Mangelnährlösung nach Hoagland-Arnon

| Präparat (nach Beispiel Nr.) | Präparat-Kennzeichnung | mg N/l Torfkultursubstrat | Erntezeitpunkt: 15.01.1981 | | | | |
|---|---|---|---|---|---|---|---|
| | | | ⌀ Wuchshöhe in cm | ⌀ Bonitierung: 1 = beste 9 = schlechteste | | ⌀ Frischgewicht in g | ⌀ Trockengewicht in g |
| | | | | Blattgrünfärbung | Wuchsbild | | |
| 1 | Mg/Al/$NO_3$ | 200<br>400 | 21,0<br>22,4 | 4,0<br>2,5 | 5,0<br>3,0 | 13,2<br>19,6 | 1,2<br>1,5 |
| 3 | Ca/Al/$NO_3$ | 200<br>400 | 25,7<br>28,5 | 3,5<br>2,5 | 4,5<br>2,5 | 20,0<br>26,8 | 1,8<br>2,2 |
| 2 | Mg/Al/$NO_3$ | 200<br>400 | 30,3<br>33,1 | 3,0<br>2,0 | 4,0<br>2,0 | 26,4<br>22,0 | 2,2<br>2,2 |
| 5 | Ca/Al/Fe/$NO_3$ | 200<br>400 | 24,9<br>24,5 | 3,3<br>3,5 | 4,3<br>2,5 | 22,8<br>27,0 | 2,1<br>2,0 |

| Präparat (nach Beispiel Nr.) | Präparat-Kennzeichnung | mg N/l Torfkultursubstrat | Erntezeitpunkt: 15.01.1981 | | | | |
|---|---|---|---|---|---|---|---|
| | | | Ø Wuchshöhe in cm | Ø Bonitierung: 1 = beste 9 = schlechteste | | Ø Frischgewicht in g | Ø Trockengewicht in g |
| | | | | Blattgrünfärbung | Wuchsbild | | |
| 4 | Ca/Al/Fe/$NO_3$ | 200<br>400 | 27,1<br>30,3 | 3,8<br>2,3 | 4,5<br>2,5 | 22,5<br>27,7 | 2,0<br>2,2 |
| Isodur (Vergleichs-N-Depotdünger | $C_6H_{14}O_2N_{24}$ Isobutylidendiharnstoff | 200<br>400 | 27,7<br>16,1 | 4,0<br>2,5 | 4,8<br>4,0 | 18,5<br>16,2 | 1,8<br>1,0 |
| ohne N-Zusatzdüngung | — | — | 17,7 | 5,0 | 7,0 | 6,4 | 0,5 |

Die Versuchsresultate geben zu erkennen, dass nitrathaltige Kompositionsverbindungen Stickstoffwirkungen auf die Pflanze Tomate entfalten, die denen des Harnstoffkondensats Isodur gleichkommen und vielfach sogar übertreffen.

*Beispiel 19:*

Versuch mit nitrathaltigen Kompositionsverbindungen als N-Depotdünger in Lösungskultur (Hydrokultur)

Pflanze: Gurke, Sorte: „Die Beste", 3 Pflanzen/Topf als Jungpflanzen eingesetzt am 21.11.1980, 3-fach wiederholt angesetzt

Kulturmedium: N-Mangelnährlösung nach Hoagland-Arnon bzw. Leitungswasser beim Vergleichshydrodünger" Lewatit HD 5 (Handelsprodukt der Bayer AG)

| Präparat (nach Beispiel Nr.) | Präparat-Kennzeichnung | mg N/l Lösung | Bonitierungen: 1 = beste, 9 = schlechteste Auswertungen | | | | | |
|---|---|---|---|---|---|---|---|---|
| | | | 18.12.1980 | | 30.12.1980 | | 06.01.1981 | |
| | | | Wuchsbild | Grün färbung | Wuchsbild | Grünfärbung | Wuchsbild | Grünfärbung |
| 1 | Mg/Al/$NO_3$ | 100<br>200 | 2,5<br>2,8 | 3,0<br>2,0 | 4,0<br>2,0 | 4,0<br>2,0 | 3,0<br>2,0 | 4,0<br>2,5 |
| 2 | Mg/Al/$NO_3$ | 100<br>200 | 2,5<br>2,5 | 2,5<br>2,0 | 2,8<br>1,8 | 2,5<br>2,0 | 3,0<br>2,0 | 3,0<br>1,8 |
| Isodur (N-Depotdünger) | $C_6H_{14}O_2N_4$ Isobutylidendiharnstoff | 100<br>200 | 3,0<br>2,3 | 3,0<br>2,5 | 6,0<br>4,8 | 5,0<br>4,0 | 4,5<br>4,0 | 5,0<br>5,0 |
| Lewatit HD 5 (Hydrodünger) | Ionenaustauscher aus Polystyrolharz, beladen pro Liter mit ca. 18 g N, 3 g P, 12 g K und Spurennährstoffen 2,5% | 100<br>200 | 2,5<br>2,0 | 2,0<br>2,0 | 1,8<br>1,8 | 2,3<br>2,3 | 2,0<br>1,5 | 3,5<br>2,8 |

Im Vergleich zu den Hydrokultur-Langzeitdünger "Lewatit HD 5 ist auch über nitrathaltige Kompositionsverbindungen eine recht günstige Stickstoffversorgung der Testpflanze Gurke in der Hydrokultur sicherzustellen, während der Harnstoff-Kondensatdünger Isodur nur ungenügend pflanzenaufnehmbaren Stickstoff freisetzte.

*Beispiel 20:*

Versuch mit spurennährstoffhaltigen Kompositionsverbindungen als langsam fliessende Mikronährstoffdünger in Torfkultursubstrat

Pflanze: Tomate, Sorte: „Rheinlands Ruhm", 2 Pflanzen/Gefäss, eingepflanzt am 23.01.1981, 5-fach wiederholt Kulturmedium: Torfkultursubstrat, hergestellt aus Düngetorf (Weisstorf) +3 g/l Kalkmergel

Grunddüngung: Nährlösung nach Hoagland-Arnon, ohne Spurennährstoffe, fortlaufend verabreicht

| Präparat (nach Beispiel Nr.) | Präparat-Kennzeichnung | mg Präparat/l Substrat | Bonitierungen sowie Erntegewichte: 1 = beste, 9 = schlechteste | | | | | | | | | | | | | |
|---|---|---|---|---|---|---|---|---|---|---|---|---|---|---|---|---|
| | | | Erstes Wachstum | | | | 1. Austrieb nach Abschneiden | | | | 2. Austrieb nach erneutem Schnitt | | | | Gesamt | |
| | | | ⌀ Bonitur 03.03.81 | | 1. Schnitt 06.03.81 | | Bonitur 02.04.81 | | 2. Schnitt 03.04.81 | | Bonitur 24.04.81 | | 3. Schnitt 30.04.81 | | | |
| | | | Wuchsbild | Grünfärbung | Frischsubstanzgewicht in g | Trockensubstanzgewicht in g | Wuchsbild | Grünfärbung | Frischsubstanzgewicht in g | Trockensubstanzgewicht in g | Wuchsbild | Grünfärbung | Frischsubstanzgewicht in g | Trockensubstanzgewicht in g | Frischsubstanzgewicht in g | Trockensubstanzgewicht in g |
| 6a | Zn/Cu/Fe/Mn/B/Mo | 5 | 1,8 | 3 | 48,3 | 3,4 | 2,5 | 3 | 40,7 | 2,8 | 1,3 | 2,3 | 59,8 | 4,7 | 148,8 | 10,9 |
| | | 10 | 1,8 | 3 | 49,0 | 3,8 | 2 | 3 | 36,3 | 2,4 | 2,3 | 3,3 | 51,5 | 3,8 | 136,8 | 10,0 |
| | | 25 | 1,8 | 3 | 51,7 | 3,9 | 2,3 | 3 | 38,1 | 2,5 | 2 | 3,3 | 49,8 | 3,6 | 139,6 | 10,0 |
| | | 50 | 1,8 | 3 | 53,1 | 4,1 | 2 | 3 | 43,2 | 3,0 | 1,5 | 2,8 | 61,3 | 4,8 | 157,6 | 11,9 |
| 6b | Zn/Cu/Fe/Mn/B/Mo/EDTA | 5 | 1,8 | 3 | 52,2 | 4,2 | 2,3 | 3 | 35,2 | 2,5 | 2,5 | 3,5 | 49,0 | 3,6 | 136,4 | 10,3 |
| | | 10 | 1,8 | 3 | 51,9 | 4,1 | 1,8 | 3 | 47,6 | 3,0 | 2 | 2,5 | 58,2 | 4,7 | 147,7 | 11,8 |
| | | 25 | 1,5 | 3 | 52,8 | 4,2 | 1,8 | 3 | 43,4 | 3,1 | 2 | 3,3 | 54,1 | 4,1 | 150,3 | 11,4 |
| | | 50 | 1,5 | 3 | 60,2 | 4,6 | 1,8 | 3 | 51,3 | 3,5 | 2 | 3,3 | 56,0 | 4,1 | 167,5 | 12,2 |
| 7a | Zn/Cu/Fe/Mn/B/Mo | 5 | 1,5 | 3 | 57,1 | 4,4 | 2 | 3 | 41,6 | 3,0 | 2 | 3 | 54,1 | 4,1 | 152,8 | 11,5 |
| | | 10 | 1,5 | 3 | 52,3 | 3,5 | 2,3 | 3 | 35,9 | 2,5 | 2 | 3,3 | 51,5 | 3,8 | 139,7 | 9,8 |
| | | 25 | 1,5 | 3 | 56,3 | 3,8 | 2 | 3 | 39,5 | 2,7 | 2 | 3,3 | 55,1 | 4,1 | 150,9 | 10,6 |
| 7b | Zn/Cu/Fe/Mn/B/Mo/Lign.-sul. | 5 | 1,3 | 3 | 59,9 | 4,2 | 2,3 | 3 | 38,3 | 2,5 | 2 | 3,3 | 52,9 | 3,9 | 151,1 | 10,6 |
| | | 10 | 1,5 | 3 | 55,8 | 4,4 | 2 | 3 | 40,5 | 2,8 | 2,3 | 3,5 | 48,7 | 3,5 | 145,0 | 10,7 |
| | | 25 | 1,5 | 3 | 57,0 | 4,3 | 1,8 | 3 | 47,5 | 3,4 | 1,8 | 2,3 | 61,1 | 4,7 | 165,6 | 12,4 |
| | | 50 | 1,5 | 3 | 61,4 | 4,6 | 1,5 | 3 | 52,1 | 4,0 | 1,5 | 2,5 | 57,6 | 4,8 | 171,1 | 13,4 |
| 8a | Zn/Cu/Fe/Mn/B/Mo | 5 | 1,8 | 3 | 51,9 | 4,1 | 1,8 | 3 | 42,9 | 3,1 | 1,5 | 2,3 | 57,1 | 4,5 | 151,9 | 11,7 |
| | | 10 | 1,5 | 2,5 | 61,6 | 5,0 | 2,3 | 3 | 36,0 | 2,5 | 2,5 | 3,5 | 45,7 | 3,4 | 143,3 | 10,9 |
| | | 25 | 1,3 | 3 | 62,4 | 5,0 | 1,8 | 3 | 48,6 | 3,7 | 1,3 | 2 | 67,2 | 5,4 | 178,2 | 14,1 |
| | | 50 | 1,3 | 3 | 65,0 | 4,7 | 1,8 | 3 | 48,0 | 3,5 | 1,5 | 3,5 | 58,0 | 4,2 | 171,0 | 12,4 |
| 8b | Zn/Cu/Fe/Mn/B/Mo/Humins. | 5 | 1 | 3 | 55,4 | 4,0 | 1,8 | 3 | 39,8 | 2,8 | 1,8 | 3,3 | 47,2 | 3,4 | 142,4 | 10,2 |
| | | 10 | 1,3 | 3 | 54,2 | 3,9 | 1,8 | 3 | 44,8 | 3,2 | 1,3 | 2,5 | 58,3 | 4,3 | 157,3 | 11,4 |
| | | 25 | 1,3 | 3 | 63,6 | 4,6 | 1,8 | 3 | 42,2 | 3,2 | 1,3 | 2,8 | 58,0 | 4,5 | 163,8 | 12,3 |
| | | 50 | 1 | 3 | 75,9 | 5,7 | 1,8 | 3 | 42,1 | 2,9 | 1,8 | 3,8 | 47,8 | 3,4 | 165,8 | 12,0 |
| | Nährlösung ohne Spurennahrstoffe | — | 3,5 | 5 | 42,4 | 2,9 | 4 | 5 | 18,1 | 1,3 | 4,5 | 5 | 25,6 | 1,9 | 86,1 | 6,1 |
| | Nährlösung voll | — | 2 | 3 | 53,0 | 4,0 | 2 | 3 | 43,6 | 4,0 | 1,8 | 3 | 70,2 | 5,7 | 166,8 | 13,7 |

Im Vergleich zu einer zeitlich gestaffelten Zugabe der Mikronährstoffe in der Behandlung „Nährlösung voll" zeigt sich, dass die spurennährstoffhaltigen Kompositionsverbindungen gute langsam fliessende Mikronährstoffdünger in Torfkultursubstraten darstellen. Der Einbau von komplexbildenden Substanzen förderte im allgemeinen die Wirksamkeit der Kompositionsdünger.

*Beispiel 21:*

Versuch mit spurennährstoffhaltigen Kompositionsverbindungen als langsam fliessende Mikronährstoffdünger in Torfkultursubstrat

Pflanze: Tomate, Sorte: „Rheinlands Ruhm", 1 Pflanze/Gefäss, 5-fach wiederholt, eingepflanzt am 30.10.1981

Kulturmedium: Torfkultursubstrat, hergestellt aus Düngetorf (Weisstorf) +3 g/l Kalkmergel

Grunddüngung: Nährlösung nach Hoagland-Arnon ohne Spurennährstoffe, fortlaufend verabreicht

| Präparat (nach Beispiel Nr.) | Präparat-Kennzeichnung | mg Präparat/l Substrat | Ø Höhe in cm | | Ø Bonitur Grünfärbung 1 = Bestwert 9 = völlig chlorotisch 02.12.81 | Ø Gewicht in g 11.12.81 | |
|---|---|---|---|---|---|---|---|
| | | | 01.12.81 | 14.12.81 | | Frischgewicht | Trockengewicht |
| 9 | Mikronährstoffe/ Ligninsulf./ Huminsäure | 5<br>10<br>25<br>50 | 11,2<br>11,8<br>12,4<br>15,0 | 15,2<br>16,4<br>16,8<br>22,6 | 2,1<br>2<br>2,1<br>2,2 | 17,3<br>16,1<br>16,8<br>23,3 | 1,5<br>2,2<br>1,5<br>2,0 |
| 10 | Mikronährstoffe/ Ligninsulf./ Huminsäure | 5<br>10<br>25<br>50 | 9,6<br>10,8<br>12,4<br>17,6 | 11,6<br>14,6<br>17,4<br>23,0 | 2,1<br>2,2<br>2,2<br>2,2 | 12,5<br>15,3<br>18,1<br>26,1 | 1,1<br>1,5<br>1,6<br>2,3 |
| Fetrilon Combi | 2,4% Mg, 1,5% Fe, 1,5% Mn, 0,5% Cu, 0,3% B sowie Spuren von Mo und Co | 20 | 9,6 | 11,2 | 2,1 | 10,8 | 1,1 |
| — | Hoagland-Nährlösung ohne Spurennährstoffe gegossen | — | 11,2 | 14,2 | 2,2 | 13,7 | 1,3 |

Die Versuchsergebnisse zeigen, dass die beiden spurennährstoffhaltigen Kompositionsverbindungen durchaus zur Mikronährstoffversorgung von Pflanzen beitragen können.

*Beispiel 22:*

Versuch mit spurennährstoffhaltigen Kompositionsverbindungen als langsam fliessender Mikronährstoffdünger in Lösungskultur (Hydrokultur)

Pflanze: Gurke, Sorte: „Die Beste", 3 Pflanzen/ Gefäss eingepflanzt am 27.11.1980, 3-fach wiederholt

Kulturmedium: Spurenelementmangel – Nährlösung nach Hoagland-Arnon

| Präparat (nach Beispiel Nr.) | Präparat-Kennzeichnung | mg/l | Bonitierungen: 1 = Bestwert, 9 = schlechtester Wert | | | | | | |
|---|---|---|---|---|---|---|---|---|---|
| | | | Boniturdatum 18.12.80 | | Boniturdatum 06.01.81 | | Auswertung am 20.01.81 | | |
| | | | Ø Wuchsbild | Ø Grünfärbung | Ø Wuchsbild | Ø Grünfärbung | Ø Wuchsbild | Ø Grünfärbung | Ø Wuchshöhe in cm |
| 7a | Mikronährstoffe | 5<br>10<br>25<br>50 | 4<br>3<br>3<br>2 | 2,5 | 2,5<br>2,5<br>2<br>2,5 | 2,5<br>2<br>2<br>2,5 | 2,5<br>2,3<br>2,5<br>2,5 | 2,3<br>2,3<br>3<br>4,5 | 27,3<br>32,1<br>41,7<br>43,8 |

| Präparat (nach Beispiel Nr.) | Präparat-Kennzeichnung | mg/l | Bonitierungen: 1 = Bestwert, 9 = schlechtester Wert | | | | | | |
|---|---|---|---|---|---|---|---|---|---|
| | | | Boniturdatum 18.12.80 | | Boniturdatum 06.01.81 | | Auswertung am 20.01.81 | | |
| | | | Ø Wuchsbild | Ø Grünfärbung | Ø Wuchsbild | Ø Grünfärbung | Ø Wuchsbild | Ø Grünfärbung | Ø Wuchshöhe in cm |
| 7b | Mikronährstoffe/Ligninsulfonat | 5 | 2,5 | 2,5 | 2 | 2 | 2 | 2 | 41,0 |
| | | 10 | 2,5 | | 2 | 2,5 | 2,3 | 2 | 41,7 |
| | | 25 | 2,5 | | 2,5 | 2,5 | 2,5 | 2,3 | 37,6 |
| | | 50 | 2,5 | | 2,5 | 2,8 | 3 | 4 | 31,2 |
| 8a | Mikronährstoffe | 5 | 3,5 | 2,5 | 3 | 2,5 | 2,5 | 2,3 | 31,2 |
| | | 10 | 3,5 | | 2,5 | 2,8 | 2,3 | 2,3 | 39,4 |
| | | 25 | 4 | | 3 | 2,8 | 2,8 | 3,5 | 33,9 |
| | | 50 | 3,5 | | 3 | 2,5 | 2,8 | 4,5 | 34,4 |
| 8b | Mikronährstoffe/Huminsäure | 5 | 4 | 3 | 2,5 | 2,5 | 2,5 | 2,3 | 34,6 |
| | | 10 | 4 | | 2,5 | 2,5 | 2,5 | 2,3 | 34,6 |
| | | 25 | 4,5 | | 3,5 | 2,5 | 4 | 2,3 | 20,6 |
| | | 50 | 5 | | 4 | 3,0 | 4,5 | 3 | 16,7 |
| | Nährlösung ohne Spurennährstoffe | — | 5 | 2,5 | 3,5 | 3 | 3,8 | 2,8 | 22,7 |
| | Nährlösung voll | — | 3,5 | 2 | 3,5 | 2 | 3 | 1,5 | 23,2 |

Auch in der Lösungskultur (Hydrokultur) stellen spurennährstoffhaltige Kompositionsverbindungen gute Mikronährstoffdünger dar, welche die Nährstoffe langsam abgeben. Die beste Wirkung entfaltet das Präparat nach Beispiel 7b, das 4% Natrium-Ligninsulfonat enthält, wodurch eine Komplexierung von den Schwermetall-Spurennährstoffen erfolgt. Der Zusatz von Huminsäure hatte hingegen keine so positiven Auswirkungen, weil es möglicherweise hier zu einer Einschränkung der Pflanzenzugänglichkeit des Kupfers in Folge Bildung schwerlöslicher Cu-Humate gekommen sein kann.

*Beispiel 23:*

Versuch mit spurennährstoffhaltigen Kompositionsverbindungen als langsam fliessende Mikronährstoffdünger in Lösungskultur (Hydrokultur)

Pflanze: Gurke, Sorte: „Die Beste", 3 Pflanzen/Topf als Jungpflanzen eingesetzt am 30.10.1981 3-fach wiederholt

Kulturmedium: Hoagland-Nährlösung ohne Spurennährstoffe

| Präparat (nach Beispiel Nr.) | Präparat-Kennzeichnung | mg Präparat/l Nährlösungssubstrat | Ø Höhe in cm | | Ø Bonitur Grünfärbung 1 = Bestwert 9 = völlig chlorotisch 02.12.81 | Ø Gewicht in g 14.12.81 | |
|---|---|---|---|---|---|---|---|
| | | | 01.12.81 | 14.12.81 | | Frischgewicht | Trockengewicht |
| 9 | Mikronährstoffe/Ligninulf./Huminsäure | 5 | 14,5 | 18,4 | 2,7 | 17,1 | 1,6 |
| | | 10 | 19,4 | 25,7 | 2,8 | 23,8 | 2,4 |
| | | 25 | 20,0 | 30,8 | 2,6 | 29,1 | 2,6 |
| | | 50 | 17,1 | 34,2 | 2,7 | 27,9 | 2,3 |
| 10 | Mikronährstoffe/Ligninsulf./Huminsäure | 5 | 26,9 | 31,0 | 2,6 | 23,1 | 2,2 |
| | | 10 | 30,5 | 46,4 | 3,2 | 34,8 | 2,9 |
| | | 25 | 29,1 | 40,0 | 2,8 | 27,7 | 2,3 |
| | | 50 | 23,2 | 35,7 | 3,2 | 24,6 | 2,3 |

| Präparat (nach Beispiel Nr.) | Präparat-Kennzeichnung | mg Präparat/l Nährlösungssubstrat | ⌀ Höhe in cm | | ⌀ Bonitur Grünfärbung 1 = Bestwert 9 = völlig chlorotisch 02.12.81 | ⌀ Gewicht in g 14.12.81 | |
|---|---|---|---|---|---|---|---|
| | | | 01.12.81 | 14.12.81 | | Frischgewicht | Trockengewicht |
| Hydrodünger Lewatit HD 5 | Ionenaustauscherdünger aus Polystyrolharz, beladen pro Liter mit ca. 18 g N, 3 g P, 12 g K und Spurennährstoffen | 12 ml | 20,7 | 22,5 | 2,1 | 15,3 | 1,4 |
| — | Hoagland-Nährlösung ohne Spurennährstoffe | — | 13,3 | 15,0 | 2,8 | 16,6 | 1,8 |

Aus den Versuchsresultaten ist zu entnehmen, dass sich die beiden spurennährstoffhaltigen Kompositionsverbindungen zur Spurennährstoffversorgung von Pflanzen in Lösungskultur (Hydrokultur) eignen.

*Beispiel 24:*

Versuch mit einsenhaltigen Kompositionsverbindungen als Eisendepotdünger bei Einmischung derselben in ein Inertsubstrat, bestehend aus einem Gemisch von Polystyrolschaumstofflocken (Styromull) und Kaliumalginat im Volumenverhältnis 10:1

Testpflanzen: chlorotische Eisenmangelpflanzen von Chrysantheme, Sorte: Yellow Delaware, 3 Pflanzen/Gefäss eingesetzt am 21.9.1981

Substratlösung: Eisen-Mangelnährlösung durch Hoagland.Arnon

| Präparat (nach Beispiel Nr.) | Präparat-Kennzeichnung | mg Präparat/l Substrat | ⌀ Bonitierung der Grünfärbung junger Blätter: 1 = tiefdunkelgrün (Bestwert) 9 = völlig chlorotisch (gelb-weiss) | | | |
|---|---|---|---|---|---|---|
| | | | am: 02.10.81 | am: 13.10.81 | am: 20.10.81 | am: 05.11.81 |
| 11 | Fe/Al/Ligninsulf. | 316 | 3,8 | 2,8 | 2 | 2 |
| 12 | Ca/Al/Fe(CN)$_5$-NO | 250<br>500 | 2,1<br>2,3 | 1,8<br>1,8 | 2,1<br>2 | 2,1<br>1,5 |
| Fetrilon (zum Vergleich) | Na$_2$-Fe-Ethylendiamintetraacetat mit 5% Fe | 200 | 3,8 | 5 | 5,8 | 6,7 |
| — | unbehandelt (Kontrolle) | — | 9 | 9 | 9 | 9 |

Bei Aufnahme über die Wurzeln von chlorotischen Eisenmangelpflanzen von Chrysanthemen zeigen die eisenhaltigen Kompositionsverbindungen eine hervorragende antichlorotische Wirkung, die besonders lange anhält.

*Beispiel 25:*

Versuch mit spurennährstoffhaltigen Kompositionsverbindungen als Mikroelementblattdünger

Testpflanze: Gurke, Sorte: „Die Beste", 1 Pflanze/Gefäss 4-fach wiederholt

Basiswurzeldüngung: über Nährlösung nach Hoagland-Arnon, jedoch ohne Spurennährstoffe

Spritzungstermine: 26.08.1981 und 31.08.1981

| Präparat (nach Beispiel Nr.) | Präparat-Kennzeichnung | mg Präparat/l Spritzbrühe | g Zitronensäure/l Spritzbrühe | Ø Bonitierungen: 1 = Bestwert, 9 = schlechtester Wert 09.09.81 | | | Wuchshöhe in cm |
|---|---|---|---|---|---|---|---|
| | | | | Allgemeines Wuchsbild | Blattgrünintensität | Schädigungen | 10.09.81 |
| 8a | Mikronährstoffe | 2,5 | — | 4 | 4,5 | 4 | 24 |
| 6b | Mikronährstoffe/ EDTA | 5 | — | 4 | 5 | 2,5 | 20,9 |
| | | 5 | 10 | 4 | 3 | 4,5 | 25,9 |
| 7b | Mikronährstoffe/ Ligninsulfonat | 5 | — | 4,5 | 5 | 3 | 19 |
| Fetrilon-Combi (zum Vergleich) | 2,4% Mg, 1,5% Fe, 1,5% Mn, 0,5% Zn, 0,5% Cu, 0,3% B sowie Spuren von Mo und Co | 5 | — | 5 | 2,8 | 7 | 14,3 |
| — | unbehandelt (Kontrolle) | — | — | 6 | 5 | 4 | 12,7 |

Im Vergleich zum Standardprodukt zeigen die spurennährstoffhaltigen Kompositionsverbindungen eine gute Wirkung als Spurenelementblattdünger. Durch zusätzliche Dosierung des Komplexbildners Zitronensäure wird die Blattgrünausbildung verstärkt. Die Verträglichkeit der Kompositionsverbindungen war günstiger als die des Vergleichsdüngers.

*Beispiel 26:*

Versuch mit spurennährstoffhaltigen Kompositionsverbindungen als Mikroelementblattdünger

Testpflanze: Gurke, Sorte: „Die Beste", 1 Pflanze/Gefäss 5-fach wiederholt

Basiswurzeldüngung: über Nährlösung ohne Mikroelemente nach Hoagland-Arnon

Spritzungstermine: 17.09.1981 und 21.09.1981

| Präparat (nach Beispiel Nr.) | Präparat-Kennzeichnung | g Präparat/l Spritzbrühe | Ø Bonitierungen: 1 = Bestwert 9 = schlechtester Wert 28.09.81 | | Ø Anzahl zugewachsene Blätter |
|---|---|---|---|---|---|
| | | | Grünfärbung von jungen Blättern | Blattschädigungen | 28.09.81 |
| 9 | Mikronährstoffe/ Ligninsulf./ Huminsäure | 2,5 | 3,1 | 1,5 | 3,5 |
| 10 | Mikronährstoffe/ Ligninsulf./ Huminsäure | 5 | 3,7 | 1,5 | 2 |
| 10 | Mikronährstoffe/ Ligninsulf./ Huminsäure +5 g/l Zitronensäure | 2,5 | 2,1 | 2 | 1 |

| Präparat (nach Beispiel Nr.) | Präparat-Kennzeichnung | g Präparat/l Spritzbrühe | ∅ Bonitierungen: 1 = Bestwert 9 = schlechtester Wert 28.09.81 | | ∅ Anzahl zugewachsene Blätter |
|---|---|---|---|---|---|
| | | | Grünfärbung von jungen Blättern | Blattschädigungen | 28.09.81 |
| Fetrilon-Combi (zum Vergleich) | 2,4% Mg, 1,5% Fe, 1,5% Mn, 0,5% Zn, 0,5% Cu, 0,3% B sowie Spuren von Mo und Co | 1 | 3,8 | 8 | 0,5 |
| — | unbehandelt (Kontrolle) | — | 5,2 | 4,5 | 0,5 |

Die Wirkung von spurennährstoffhaltigen Kompositionsverbindungen als Mikroelementblattdünger war im Vergleich zu einem handelspräparat recht günstig. Bei Kombination der Kompositionsverbindung mit Zitronensäure kommt es zu einer intensiveren Blattgrün-Ausfärbung der Blätter. Die gute Pflanzenverträglichkeit der Kompositionsverbindungen gegenüber dem Standardprodukt fällt besonders auf.

*Beispiel 27:*

Versuch mit eisenhaltigen Kompositionsverbindungen als Eisenblattdünger (Antichlorosemittel)

Testpflanze: chlorotische Eisenmangelpflanzen von Chrysantheme, Sorte: „Yellow Delaware", 2 Pflanzen/Gefäss 4-fach wiederholt

Substrat: Eisenmangelnährlösung nach Hoagland-Arnon. Es wurde dafür Sorge getragen, dass von der Fe-haltigen Spritzbrühe nicht in die Eisenmangelnährlösung im Wurzelbereich gelangen konnte.

Spritzungen: 1. am 28.01.1981, 2. am 02.02.1981

| Präparat (nach Beispiel Nr.) | Präparat-Kennzeichnung | Zusätze in g pro Liter Spritzbrühe | | | | ∅ Bonitierung der Grünfärbung junger Blätter: 1 = tiefdunkelgrün (Bestwert) 9 = völlig chlorotisch | | ∅ Anzahl neugebildeter junger Blätter |
|---|---|---|---|---|---|---|---|---|
| | | Fe-Präparat | Zitronensäure | Methylcellulose | Glycerin in ml | 10.02.81 | 13.02.81 | 13.02.81 |
| 13 | Fe/Mg/Al/S/ Zitronensäure | 5,25 | — | — | — | 8,9 | 9 | 0,5 |
| | | 5,25 | 10 | — | — | 2,9 | 3,6 | 2,5 |
| | | 5,25 | 10 | 5 | — | 2,1 | 2,4 | 3,5 |
| | | 5,25 | 10 | — | 10 | 2,3 | 2,4 | 3,5 |
| 14 | Fe/Al/S/ Zitronensäure | 3 | — | — | — | 8 | 9 | 1,5 |
| | | 3 | 10 | — | — | 3 | 3,5 | 2,5 |
| | | 3 | 10 | 5 | — | 2,1 | 2,2 | 3,3 |
| | | 3 | 10 | — | 10 | 2,2 | 2,7 | 3 |
| Vergleichspräparat | $FeSO_4 \cdot 7H_2O$ | 10 | — | — | — | 1,8 | 2 | 3 aber mit Blattschäden |
| — | unbehandelt (Kontrolle) | — | — | — | — | 9 | 9 | 0,5 |

Zur vollen Entfaltung einer Antichlorosewirkung als Blattdünger benötigen die Fe-Kompositionsverbindungen einen entsprechend hohen Zusatz an Fe-Komplexierungsmitteln, wie beispielsweise Zitronensäure. Die benötigte Menge an Komplexbildner kann dabei über die Aufnahmekapazität der anorganischen Matrix hinausgehen. Der Mehrbedarf lässt sich, wie das Beispiel belegt, durch eine Nachdosierung ausgleichen, d. h. es genügt, wenn grössere Mengen an Komplexbildern erst bei der Formulierung der Präparate zugesetzt werden.

Über Komplexierungsmittel hinaus bringt die gleichzeitige Zugabe von Klebemitteln, wie Glyzerin, eine weitere Steigerung der Antichlorosewirkung.

*Beispiel 28:*

Versuch mit Kompositionsverbindungen, deren Fe-Gehalt variiert wurde, als Eisenblattdünger (Antichlorosemittel)

Testpflanze: chlorotische Eisenmangelpflanzen von Chrysantheme Sorte: „Yellow Delaware", 2 Pflanzen/Gefäss

Substrat: Eisenmangelnährlösung nach Hoagland-Arnon. Es wurde dafür Sorge getragen, dass von der Fe-haltigen Spritzbrühe nichts in die Eisenmangelnährlösung im Wurzelbereich gelangen konnte.

Spritzungen: 1. am 19.08.1981, 2. am 24.08.1981

| Präparat (nach Beispiel Nr.) | Präparat-Kennzeichnung | Fe-Gehalt (Gew.-%) | Zusätze in g/l Spritzbrühe | | ⌀ Bonitierung der Grünfärbung junger Blätter: 1 = tiefdunkelgrün (Bestwert) 9 = völlig chlorotisch | | | ⌀ Anzahl neugebildeter junger Blätter |
|---|---|---|---|---|---|---|---|---|
| | | | Fe-Präparat | Zitronensäure | 03.09.81 | 08.09.81 | 15.09.81 | 08.09.81 |
| 15 | Fe/Al/S | 30,1 | 7 | 14 | 2,2 | 2,2 | 2,7 | 4,5 |
| 11 | Fe/Al/S/ Lignins. | 18,8 | 11 | 22 | 2,1 | 2,1 | 2,5 | 5 |
| 16 | Fe/Al/S | 40,4 | 5,25 | 10,5 | 2,9 | 2,3 | 3,4 | 4,5 |
| 14 | Fe/Al/S/ Zitronens. | 34,2 | 7,5 | 15 | 2,2 | 2,9 | 3,5 | 5 |
| Fetrilon (Vergleichspräparat) | $Na_2$-Fe-EDTA | 5 | 2 | — | 4,5 | 5 | 5,5 | 3 |
| — | unbehandelt (Kontrolle) | — | — | — | 7,9 | 8,1 | 8,4 | 1,5 |

Die eisenhaltigen Kompositionsverbindungen zeigen als Blattdünger in Kombination mit Zitronensäure im Gewichtsverhältnis 1:2 eine recht gute Antichlorose-Wirkung bei der Testpflanze Chrysantheme. Diese übertrifft die vom Vergleichsdünger $Na_2$-Fe-EDTA, der bei höheren Dosierungen leicht zu Blattschädigungen führt. Die Abhängigkeit der Antichlorose-Wirkung vom eingebauten Fe-Gehalt ist, korreliert man auf gleiche Fe-Dosierungen, nur von untergeordneter Bedeutung.

*Beispiel 29:*

Versuch mit eisenhaltiger Kompositionsverbindung in Kombination mit steigenden Zitronensäuremengen als Blattdünger

Testpflanze: chlorotische Eisenmangelpflanzen von Chrysanthemen Sorte: „Yellow Delaware", 2 Pflanzen/Gefäss 4-fach wiederholt

Substrat: Eisenmangelnährlösung nach Hoagland-Arnon. Es wurde dafür Sorge getragen, dass von der eisenhaltigen Spritzbrühe nichts in die Eisenmangelnährlösung im Wurzelraum gelangen konnte.

Spritzungen: 1. am 26.06.1981, 2. am 29.06.1981

*(Tabelle auf der nächsten Seite)*

Die in diesem Versuch verwendete eisenhaltige Kompositionsverbindung bringt in Kombination mit Zitronensäure im Gewichtsverhältnis 1:1 bis 1:2 als Blattdünger die besten antichlorotischen Wirkungen hervor.

*Beispiel 30:*

Versuch mit eisenhaltigen Kompositionsverbindungen als Eisenblattdünger (Antichlorosemittel)

Testpflanze: Chlorotische Eisenmangelpflanzen von Chrysantheme Sorte: „Yellow Delaware", 2 Pflanzen/Gefäss 4-fach wiederholt

Substrat: Eisenmangelnährlösung nach Hoagland-Arnon. Es wurde dafüt Sorge getragen, dass von der Fe-haltigen Spritzbrühe nichts in die Eisenmangelnährlösung im Wurzelraum gelangen konnte.

| Präparat (nach Beispiel Nr.) | Präparat-Kennzeichnung | Aufwandmengen in g/l Spritzbrühe | | Gewichts-Verhältnis Fe-Kompositionsverbindung: Zitronensäure | ⌀ Bonitierung der Grünfärbung junger Blätter: 1 = tiefdunkelgrün (Bestwert) 9 = völlig chlorotisch | | | ⌀ Anzahl neugebildeter junger Blätter |
|---|---|---|---|---|---|---|---|---|
| | | Fe-Präparat | Zitronensäure | | 10.07.81 | 14.07.81 | 23.07.81 | 23.07.81 |
| 14 | Fe/Al/S/ Zitronensäure | 5,9 | 2,5 | 1:0,4 | 3,4 | 4,3 | 4,9 | 3,8 |
| | | 5,9 | 5 | 1:0,8 | 2,2 | 3,8 | 4,6 | 4,5 |
| | | 5,9 | 7,5 | 1:1,3 | 2 | 2,3 | 4,2 | 4 |
| | | 5,9 | 10 | 1:1,7 | 2 | 2,3 | 3,7 | 3,8 |
| | | 5,9 | 12,5 | 1:2,1 | 2 | 2,3 | 3,4 | 3,5 |
| | | 5,9 | 15 | 1:2,5 | 2 | 2,4 | 3,4 | 4 |
| | | 7,4 | 2,5 | 1:0,3 | 2,9 | 3,3 | 4,7 | 4,3 |
| | | 7,4 | 5 | 1:0,7 | 2,4 | 3 | 4,5 | 4,5 |
| | | 7,4 | 7,5 | 1:1 | 2 | 2,4 | 3,8 | 4,3 |
| | | 7,4 | 10 | 1:1,3 | 2 | 2,3 | 4 | 3,5 |
| | | 7,4 | 12,5 | 1:1,7 | 1,9 | 2 | 3,6 | 3,5 |
| | | 7,4 | 15 | 1:2 | 2 | 2 | 3,4 | 3 |
| | unbehandelt (Kontrolle) | — | — | — | 7 | 8 | 9 | 1,5 |

Spritzungen: 1. am 09.09.1981, 2. am 11.09.1981

| Präparat (nach Beispiel Nr.) | Präparat-Kennzeichnung | Zusätze in g/l Spritzbrühe | | | | ⌀ Bonitierung der Grünfärbung junger Blätter: 1 = tiefdunkelgrün (Bestwert); 9 = völlig chlorotisch | | ⌀ Anzahl neugebildeter junger Blätter |
|---|---|---|---|---|---|---|---|---|
| | | Fe-Präparat | Zitronensäure | Na-Ligninsulfonate der Lignin-Chemie Waldhof-Holmen | | | | |
| | | | | Zewa S | Zewa EF | 22.09.81 | 05.10.81 | 05.10.81 |
| 14 | Fe/Al/S/ Zitronensäure | 7,5 | — | — | — | 5,2 | 8 | 3,5 |
| | | 7,5 | 5 | — | — | 2 | 3,5 | 5 |
| | | 7,5 | 10 | — | — | 2 | 2,1 | 6 |
| | | 7,5 | — | 15 | — | 2 | 2,9 | 5 |
| | | 7,5 | — | — | 15 | 2 | 2,5 | 5 |
| Fetrilon (zum Vergleich | $Na_2$-Fe-Ethylendiamintetraacetat mit 5% Fe | 2 | — | — | — | 3 | 7,7 | 4 |
| — | unbehandelt (Kontrolle) | — | — | — | — | 8,5 | 9 | 2 |

Der Zusatz von Komplexbildnern zu der eisenhaltigen Verbindung erhöht deren chloroseheilenden effekt bei Applikation aufs Blatt. Hierbei sind von den Na-Ligninsulfonaten höhere Dosierungen erforderlich als bei der Zitronensäure. Das Vergleichspräparat $Na_2$-Fe-EDTA verursacht trotz niedriger Aufwandmengen nicht hinnehmbare Blattschädigungen und befriedigt in der antichlorotischen Nachwirkung nicht.

*Beispiel 31:*

Versuch mit eisenhaltigen Kompositionsverbindungen als Eisenblattdünger (Antichlorosemittel) bei Zusatz verschiedenartiger Eisenkomplexbildner

Testpflanze: Chlorotische Eisenmangelpflanzen von Chrysantheme Sorte: „Yellow Delaware", 2 Pflanzen/Gefäss 4-fach wiederholt

Substrat: Eisenmangelnährlösung nach Hoagland-Arnon. Es wurde dafür Sorge getragen, dass von der Fe-haltigen Spritzbrühe nichts in die Eisenmangelnährlösung im Wurzelraum gelangen konnte.

Spritzungen: 1. am 15.09.1981, 2. am 18.09.1981

| Präparat (nach Beispiel Nr.) | Präparat-Kennzeichnung | Fe-Präparat | Zusätze in g/l Spritzbrühe Fe-Komplexbildner | | | | | | | ∅ Bonierung der Grünfärbung junger Blätter: 1 = tiefdunkelgrün (Bestwert) 9 = völlig chlorotisch | | ∅ Anzahl neugebildeter junger Blätter |
|---|---|---|---|---|---|---|---|---|---|---|---|---|
| | | | Zitronensäure | Chinaldinsäure | Chromotropsäure | Kojisäure | Kupferon | Thioglycolsäure | Salicylsäure | 28.09.81 | 05.10.81 | 05.10.81 |
| 14 | Fe/Al/S/Zitronensäure | 7,5 | 5 | — | — | — | — | — | — | 2 | 3,4 | 4 |
| | | 7,5 | 5 | 0,01 | — | — | — | — | — | 1,5 | 2,9 | 4,5 |
| | | 7,5 | 5 | — | — | — | 0,01 | — | — | 2 | 2,7 | 4 |
| | | 7,5 | 5 | — | — | — | — | 0,01 | — | 2 | 2,8 | 4,5 |
| | | 7,5 | 5 | — | — | — | — | — | 0,01 | 1,5 | 2,7 | 4 |
| | | 7,5 | 5 | 0,1 | — | — | — | — | — | 1,5 | 2,6 | 4,5 |
| | | 7,5 | 5 | — | 0,1 | — | — | — | — | 1,5 | 2,9 | 4 |
| | | 7,5 | 5 | — | — | 0,1 | — | — | — | 1,5 | 2,5 | 4,5 |
| | | 7,5 | 5 | — | — | — | 0,1 | — | — | 1,5 | 2,7 | 4,5 |
| | | 7,5 | 10 | — | — | — | — | — | — | 2 | 2,1 | 4,5 |
| — | ohne Behandlung | — | — | — | — | — | — | — | — | 9 | 8 | 1,5 |

Bei Anwendung von nicht optimalen Mengen an Zitronensäure vermögen vergleichsweise sehr geringe Zusätze von hochaktiven Eisenkomplexbildnern die Antichlorosewirkung der eisenhaltigen Kompositionsverbindungen bei Applikation als Fe-Blattdünger zu verbessern.

*Beispiel 32:*

Versuch mit eisenhaltigen Kompositionsverbindungen als Eisenblattdünger in Kombination mit Zitronensäure sowie $Fe^{3+}$-reduzierenden Verbindungen

Testpflanze: chlorotische Eisenmangelpflanzen von Chrysantheme Sorte: „Yellow Delaware", 2 Pflanten/Gefäss 5-fach wiederholt

Substrat: Eisenmangelnährlösung nach Hoagland-Arnon. Es wurde dafür Sorge getragen, dass von der Fe-haltigen Spritzbrühe nichts in die Eisenmangelnährlösung im Wurzelraum gelangen konnte.

Spritzungen: 1. am 05.10.1981, 2. am 08.10.1981

| Präparat (nach Beispiel Nr.) | Präparat-Kennzeichnung | Zusätze in g/l Spritzbrühe | | | | ∅ Bonitierung der Grünfärbung junger Blätter: 1 = tiefdunkelgrün (Bestwert) 9 = völlig chlorotisch | | ∅ Anzahl neu zugewachsener junger Blätter | ∅ Bonitur von Blattschädigungen 1 Bestwert (= keine) 9 schlechtester Wert |
|---|---|---|---|---|---|---|---|---|---|
| | | Fe-Präparat | Zitronensäure | Ascorbinsäure | Thioglykolsäure | 16.10.81 | 20.10.81 | 20.10.81 | 16.10.81 |
| 14 | Fe/Al/S/ Zitronensäure | 7,5 | — | — | — | 7,8 | 6,5 | 3,5 | 1 |
| | | 7,5 | 10 | — | — | 2,6 | 3,5 | 4,5 | 1 |
| | | 7,5 | 10 | 0,25 | — | 1,9 | 2,4 | 5,5 | 1 |
| | | 7,5 | 10 | — | 0,1 | 2 | 2,2 | 6 | 2 |
| | | 7,5 | 5 | — | — | 2,6 | 4,6 | 4 | 2,5 |
| | | 7,5 | 5 | — | 0,25 | 2,1 | 3,1 | 5 | 2,5 |
| — | unbehandelt (Kontrolle) | — | — | — | — | 8,8 | 9 | 3 | 1 |

Der Zusatz von $Fe^{3+}$-reduzierenden Verbindungen, wie Ascorbinsäure oder Thioglykolsäure, zu dem Blattdüngersystem, bestehend aus einer eisenhaltigen Kompositionsverbindung und Zitronensäure, führt zu Verbesserungen in der Antichlorosewirkung.

*Beispiel 33:*

Versuch mit eisenhaltigen Kompositionsverbindungen als Eisenblattdünger bei Teilersatz des Fe-Präparats durch Eisensalze (Fe-Gesamtgehalt entsprechend: 10 g $FeSO_4 \cdot 7H_2O$/l spritzbrühe).

Testpflanze: chlorotische Eisenmangelpflanze von Chrysantheme, Sorte: "Yellow Delaware" 2 Pflanzen/Gefäss, 4-fach wiederholt

Substrat: Eisenmangelnährlösung nach Hoagland-Arnon. Es wurde dafür Sorge getragen, dass von der Fe-haltigen Spritzbrühe nichts in die Eisenmangelnährlösung im Wurzelraum gelangen konnte.

Spritzungen: 1. am 17.07.1981, 2. am 20.07.1981

*(Tabelle auf der nächsten Seite)*

Die alleinige Verwendung eines Blattdüngersystems, bestehend aus Eisensulfat und Zitronensäure, ruft zwar gute Antichlorosewirkungen hervor, aber zugleich auch nicht hinnehmbare Blattschädigungen. Letztere treten bei Applikation des Fe-Blattdünger-Systems aus einer Fe-Kompositionsverbindung und Zitronensäure nicht auf. Zur Beschleunigung des Chloroseheileffektes kann ein Teilersatz der Fe-Quelle: Kompositionsverbindung durch meistens leichter lösliche Einsensalze vorteilhaft sein. Ein Harnstoffzusatz wirkt auch wirkungsfördernd.

## Patentansprüche

1. Depotdüngemittel der allgemeinen Formel

$$x\,Me(II)O \cdot \frac{1-x}{2}\,Me(III)_2O_3 \cdot y\,A \cdot z\,I \cdot aq$$

in der:

Me(II) ein oder mehrere zweiwertige Metalle

Me(III) ein oder mehrere dreiwertige Metalle

A ein oder mehrere anorganische Säuren bzw. Anhydride anorganischer Säuren

| Präparat (nach Beispiel Nr.) | Präparat-Kennzeichnung | Fe-Präparat | Zusätze in g/l Spritzbrühe | | | | | | Harnstoff | ∅ Bonietirung der Grünfärbung junger Blätter: 1 = tiefdunkelgrün (Bestwert) 9 = völlig chlorotisch | | ∅ Anzahl neu zugewachsener junger Blätter | ∅ Bonitierung von Blattschadigungen: 1 = Bestwert (keine) 9 = schlechtester Wert |
|---|---|---|---|---|---|---|---|---|---|---|---|---|---|
| | | | Zitronensäure | $FeSO_4 \cdot 7H_2O$ | $FeCl_2 \cdot 4H_2O$ | $Fe(NO_3)_2 \cdot 9H_2O$ | Fe(III)-citrat | Wargotan (Ca-Ligninsulfonat) | | 11.08.81 | 19.08.81 | 19.08.81 | 11.08.81 |
| — | — | — | 10 | 10 | — | — | — | — | — | 2,4 | 2,9 | 6 | 5 |
| — | — | — | 10 | 10 | — | — | — | 5 | — | 2,3 | 2,9 | 6 | 5 |
| 14 | Fe/Al/S/Zitronensäure | 5,9 | 10 | — | — | — | — | — | — | 3,1 | 2,9 | 6 | 2 |
| | | 4,5 | 10 | 2,5 | — | — | — | — | — | 2,3 | 3 | 6 | 2 |
| | | 4,5 | 10 | — | 1,8 | — | — | 5 | — | 2,1 | 2,8 | 6 | 2 |
| | | 4,5 | 10 | — | — | 3,1 | — | — | — | 2,9 | 3,5 | 6 | 2 |
| | | 4,5 | 10 | — | — | — | 2,7 | 5 | — | 2,5 | 2,8 | 7 | 2 |
| | | 4,5 | 10 | 1,3 | — | 1,6 | — | — | — | 2,3 | 2,5 | 7 | 2 |
| | | 4,5 | 10 | 1,3 | 0,9 | — | — | 5 | — | 2,2 | 2,6 | 7 | 2 |
| | | 4,5 | 10 | 2,5 | — | — | — | 5 | 5 | 2 | 2 | 7 | 3 |
| — | unbehandelt (Kontrolle) | — | — | — | — | — | — | — | — | 7,4 | 8 | 2 | 1 |

I ein oder mehrere organische Verbindungen, und

ag 0-9 $H_2O$, vorzugsweise 0,5-6 bedeuten,

x, y ganze oder gebrochene Zahlen sind, und z mit x-Werten von 0-1, vorzugsweise 0,2-0,9 y-Werten von 0,05-0,7, z-Werten von 0-10 mit der weiteren Massgabe, dass zumindest eine der Komponenten ein pflanzennährelement enthält.

2. Depotdüngemittel gemäss Anspruch 1, dadurch gekennzeichnet, dass die zweiwertigen Metalle eines oder mehrere der Gruppe Calcium, Magnesium, Eisen, Mangan, Kupfer, Nickel, Kobalt und Zink, die dreiwertigen eines oder mehrere der Gruppe Aluminium, Eisen und/oder Mangan sind.

3. Depotdüngemittel gemäss einem der Ansprüche 1 oder 2, dadurch gekennzeichnet, dass die anorganischen Säuren und/oder Anhydride anorganischer Säuren solche der Elemente Stickstoff, Phosphor, Schwefel, Chlor, Bor, Kohlenstoff, Silizium, Molybdän, Titan und/oder Vanadin sind.

4. Depotdüngemittel gemäss einem der Ansprüche 1 bis 3, dadurch gekennzeichnet, dass die organischen Verbindungen ein oder mehrere Komplexbildner und/oder Pflanzenschutzmittel und/oder nährstoffhaltige organische Verbindungen sind.

5. Verfahren zur Herstellung der Depotdüngemittel gemäss einem der Ansprüche 1 bis 4, dadurch gekennzeichnet, dass eine zwei- und/oder dreiwertige Metallsalzlösung im gewünschten Verhältnis mit äquivalenten Mengen oder im Überschuss an Alkalien, ggf. mit Alkalimetallaten, normal, invers oder gleichzeitig bei Temperaturen bis 100° C gefällt wird, wobei die anorganischen Säuren und/oder Anhydride als solche oder als Salze und die organischen Substanten mit vorgelegt, gleichzeitig oder nach der Fällung oder ggf. nach Abtrennung der Mutterlauge, der anorganischen Matrix zugegeben werden können.

6. Verfahren zur Herstellung der Depotdüngemittel gemäss einem der Ansprüche 1 bis 4, dadurch gekennzeichnet, dass basische Salze der zwei- und/oder dreiwertigen Metalle mit der Säureform der anorganischen und ggf. organischen Ionen bei Temperaturen bis 100° C an der Luft behandelt und diese ggf. nach einer vorhergehenden Alkalisierung im Autoklaven bei Temperaturen bis zu 350° C bis zu 12 h lang erhitzt werden.

7. Verwendung der Depotdüngemittel gemäss einem der Ansprüche 1 bis 6 als Blattdünger.

8. Verwendung der Depotdüngemittel gemäss einem der Ansprüche 1 bis 6 als Boden- und Substrat-Dünger.

9. Verwendung der Depotdüngemittel gemäss einem der Ansprüche 1 bis 6 zum Düngen von Hydrokulturen und höhreren Wasserpflanzen.

## Claims

1. Depot fertilisers of the general formula

$$x\, Me(II)O \cdot \frac{1-x}{2} Me(III)_2O_3 \cdot y\, A \cdot z\, I \cdot aq$$

in which:

Me(II) denotes one or more divalent metals

Me(III) denotes one or more trivalent metals

A denotes one or more inorganic acids or anhydrides of inorganic acids

I denotes one or more organic compounds and

aq denotes 0-9 $H_2O$, preferably 0.5-6,

x, y and z are whole numbers or fractions with x-values of 0-1, preferably 0.2-0.9, y-values of 0.05-0.7, and z-values of 0-10, with the further proviso that at least one of the components contains a plant nutrient element.

2. Depot fertilisers according to Claim 1, characterized in that the divalent metals are one or more from the group comprising calcium, magnesium, iron, manganese, copper, nickel, cobalt and zinc, and the trivalent metals are one or more from the group comprising aluminium, iron and/or manganese.

3. Depot fertiliser according to one of Claims 1 or 2, characterised in that the inorganic acids and/or anhydrides of inorganic acids are those of the elements nitrogen, phosphorus, sulphur, chlorine, boron, carbon, silicon, molybdenum, titanium and/or vanadium.

4. Depot fertilisers according to one of Claims 1 to 3, characterised in that the organic compounds are one or more complexing agents and/or plant protection agents and/or nutrient-containing organic compounds.

5. Process for the production of the depot fertilisers according to one of Claims 1 to 4, characterised in that a di- and/or trivalent metal salt solution is precipitated, in the required ration, with equivalent quantities or an excess of alkalis, optionally with alkali metallates, normally, inversely or simultaneously, at temperatures of up to 100° C, it being possible for the inorganic acids and/or anhydrides, as such or in the form of salts, and the organic substances to be initially introduced together with the inorganic matrix, or to be added to the inorganic matrix at the same time as or after the precipitation, or, optionally, after separating off the mother liquor.

6. Process for the production of the depot fertilisers according to one of Claims 1 to 4, characterised in that basic salts of the di- and/or trivalent metals are treated with the acid from of the inorganic and optionally organic ions, at temperatures of up to 100° C, in air, and these are, optionally after prior alkalisation, heated in an autoclave at temperatures of up to 350° C for up to 12 h.

7. Use of the depot fertilisers according to one of Claims 1 to 6 as leaf fertilisers.

8. Use of the depot fertilisers according to one of Claims 1 to 6 as soil and substrate fertilisers.

9. Use of the depot fertilisers according to one of Claims 1 to 6 for fertilising hydrocultures and higher aquatic plants.

## Revendications

1. Engrais persistant de formule générale

$$x\, Me(II)O \cdot \frac{1-x}{2} Me(III)_2O_3 \cdot y\, A \cdot z\, I \cdot aq$$

dans laquelle:

Me(II) représente un ou plusieurs métaux divalents

Me(III) représente un ou plusieurs métaux trivalents

a représente un ou plusieurs acides minéraux ou anhydrides d'acides minéraux

I représente un ou plusieurs composés organiques, et

aq représente 0 à 9 $H_2O$, de préférence 0,5 à 6,

x, y et z sont des nombres entiers ou fractionnaires avec des valeurs de 0 à 1, de préférence de 0,2 à 0,9 pour x, des valeurs de 0,05 à 0,7 pour y et des valeurs de 0 à 10 pour z,

étant en outre spécifié qu'au moins un des composants contient un élément nutritif pour les végétaux.

2. Engrais persistant selon la revendication 1, caractérisé en ce que les métaux divalents consistent en un ou plusieurs métaux du groupe du calcium, du magnésium, du fer, du manganèse, du cuivre, du nickel, du cobalt et du zinc, et les métaux trivalents consistent en un ou plusieurs métaux du groupe de l'aluminium, du fer et/ou du manganèse.

3. Engrais persistant selon l'une des revendications 1 ou 2, caractérisé en ce que les acides minéraux et/ou anhydrides d'acides minéraux sont les acides et/ou anhydrides des éléments azote, phosphore, soufre, chlore, bore, carbone, silicium, molybdène, titane et/ou vanadium.

4. Engrais persistant selon l'une des revendications 1 à 3, caractérisé en ce que les composés organiques consistent en un ou plusieurs complexants et/ou produits phytosanitaires et/ou composés organiques contenant des substances nutritives.

5. Procédé de préparation des engrais persistants selon l'une des revendications 1 à 4, caractérisé en ce que l'on précipite une solution de sels de métaux divalents et/ou trivalents au rapport voulu des quantités équivalentes ou un excès d'alcali, éventuellement avec des métallates alcalins, normalement, à l'inverse ou simultanément à des températures allant jusqu'à 100° C, les acides et/ou anhydrides minéraux pouvant être ajoutés tels quels ou à l'état de sels à la gangue minérale et les substances organiques pouvant être mélangées au préalable avec la gangue minérale ou ajoutées simultanément ou après la précipitation ou le cas échéant séparation des liqueurs mères.

6. Procédé de préparation des engrais persistants selon l'une des revendications 1 à 4, caractérisé en ce que l'on traite des sels basiques des métaux di- et/ou trivalents par la forme acide des ions minéraux et éventuellement organiques à des températures allant jusqu'à 100° C à l'air puis, éventuellement après une alcalinisation, on les chauffe à l'autoclave à des températures allant jusqu'à 350° C pendant des durées allant jusqu'à 12 h.

7. Utilisation de l'engrais persistant selon l'une des revendications 1 à 6 en tant qu'engrais pour le feuillage.

8. Utilisation de l'engrais persistant selon l'une des revendications 1 à 6 en tant qu'engrais pour le sol et pour les substrats.

9. Utilisation de l'engrais persistant selon l'une des revendications 1 à 6, pour la fumure des hydrocarbures et des végétaux aquatiques supérieurs.